(19) Europäisches Patentamt / European Patent Office / Office européen des brevets

(11) **EP 4 418 202 A1**

(12) **EUROPEAN PATENT APPLICATION**
published in accordance with Art. 153(4) EPC

(43) Date of publication:
**21.08.2024 Bulletin 2024/34**

(21) Application number: **21960615.9**

(22) Date of filing: **13.10.2021**

(51) International Patent Classification (IPC):
**G06T 7/00** $^{(2017.01)}$

(52) Cooperative Patent Classification (CPC):
**G06T 7/00**

(86) International application number:
**PCT/JP2021/037946**

(87) International publication number:
**WO 2023/062757 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **SAKATA, Masato**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57) An information processing program for causing a computer to execute processing including: acquiring skeleton data that represents, in time series, a skeleton of an object recognized based on sensor data for the object; calculating a feature amount that represents a temporal change of a movement for each part of the skeleton of the object based on the acquired skeleton data; and specifying an object part to be smoothed in the skeleton represented by the skeleton data based on the calculated feature amount.

## FIG. 22

**Description**

FIELD

The present disclosure relates to an information processing program, an information processing method, and an information processing device.

BACKGROUND

Conventionally, there is a technology for recognizing a three-dimensional movement of a person. For example, in fields of sports, healthcare, entertainment, and the like, there is an increasing need for skeleton estimation. Furthermore, accuracy of 2 dimension (D)/3D skeleton recognition using an image is being improved by improvement of technologies such as deep learning.

As a prior art, for example, there is a technology of specifying a posture of a watching target person based on a skeleton tracking signal indicating a shape of a skeleton of the watching target person detected from a two-dimensional image that is a captured image of the watching target person. Furthermore, there is a technology of estimating three-dimensional postures of a person by using a skeleton model.

SUMMARY

TECHNICAL PROBLEM

However, in the prior art, accuracy when a skeleton of an object (for example, a performer in a gymnastics competition) is estimated from sensor data such as an image obtained by capturing the object may deteriorate.

In one aspect, an object of the present disclosure is to improve accuracy of skeleton estimation.

SOLUTION TO PROBLEM

In one embodiment, there is provided an information processing program that acquires skeleton data that represents, in time series, a skeleton of an object recognized based on sensor data for the object, calculates a feature amount that represents a temporal change of a movement for each part of the skeleton of the object based on the acquired skeleton data, and specifies an object part to be smoothed in the skeleton represented by the skeleton data based on the calculated feature amount.

ADVANTAGEOUS EFFECTS OF INVENTION

According to one aspect of the present disclosure, an effect that accuracy of skeleton estimation may be improved is exerted.

BRIEF DESCRIPTION OF DRAWINGS

FIG. 1 is an explanatory diagram illustrating an example of an information processing method according to an embodiment.
FIG. 2 is an explanatory diagram illustrating an example of skeleton recognition processing.
FIG. 3 is an explanatory diagram illustrating a system configuration example of an information processing system 300.
FIG. 4 is a block diagram illustrating a hardware configuration example of a skeleton estimation device 301.
FIG. 5 is an explanatory diagram illustrating an example of joint points forming a skeleton.
FIG. 6 is an explanatory diagram illustrating a data structure example of skeleton data.
FIG. 7 is a block diagram illustrating a functional configuration example of the skeleton estimation device 301.
FIG. 8 is an explanatory diagram illustrating an example of parts of a skeleton.
FIG. 9 is an explanatory diagram illustrating an example of content stored in an edge data table 900.
FIG. 10 is an explanatory diagram illustrating an example of content stored in a relative angle table 1000.
FIG. 11 is an explanatory diagram illustrating an example of content stored in an angular velocity table 1100.
FIG. 12 is an explanatory diagram illustrating an example of content stored in an angular acceleration table 1200.
FIG. 13 is an explanatory diagram (part 1) illustrating an example of a smoothing filter.
FIG. 14 is an explanatory diagram (part 2) illustrating an example of the smoothing filter.

FIG. 15 is a flowchart illustrating an example of a skeleton estimation processing procedure of the skeleton estimation device 301.

FIG. 16 is a flowchart illustrating an example of a specific processing procedure of edge data calculation processing.

FIG. 17 is a flowchart (part 1) illustrating an example of a specific processing procedure of feature amount calculation processing.

FIG. 18 is a flowchart (part 2) illustrating an example of the specific processing procedure of the feature amount calculation processing.

FIG. 19 is a flowchart (part 3) illustrating an example of the specific processing procedure of the feature amount calculation processing.

FIG. 20 is a flowchart (part 1) illustrating an example of a specific processing procedure of a smoothing degree determination processing.

FIG. 21 is a flowchart (part 2) illustrating an example of the specific processing procedure of the smoothing degree determination processing.

FIG. 22 is an explanatory diagram illustrating an example of an estimation result of a skeleton of a performer (balance beam).

FIG. 23A is an explanatory diagram (part 1) illustrating an example of an estimation result of a skeleton of a performer (rings).

FIG. 23B is an explanatory diagram (part 2) illustrating an example of the estimation result of the skeleton of the performer (rings).

FIG. 24 is an explanatory diagram illustrating a temporal change of a z coordinate of a left foot.

FIG. 25 is an explanatory diagram illustrating a specific example of a technique recognition result.

## DESCRIPTION OF EMBODIMENTS

Hereinafter, an embodiment of an information processing program, an information processing method, and an information processing device according to the present invention will be described in detail with reference to the drawings.

(Embodiment)

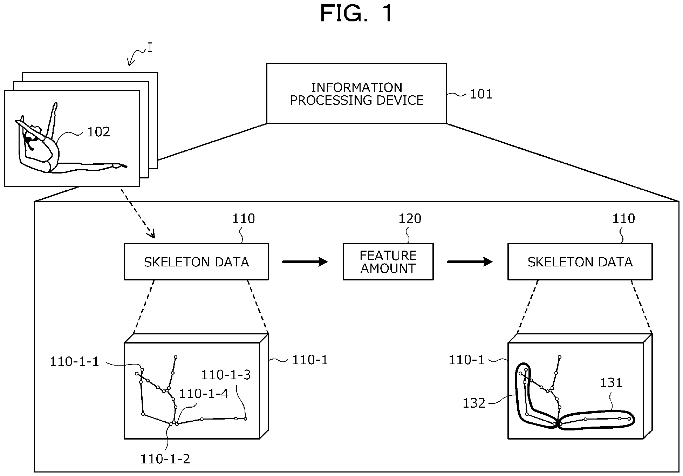

FIG. 1 is an explanatory diagram illustrating an example of the information processing method according to the embodiment. In FIG. 1, an information processing device 101 is a computer that specifies an object part to be smoothed in skeleton data representing a skeleton of an object. Here, the object is, for example, a person to be subjected to skeleton estimation. Furthermore, the object may be an animal other than a person, such as a gorilla or a monkey, or may be a robot.

The skeleton estimation is a technology of estimating a skeleton of an object by recognizing the skeleton based on sensor data for the object. The skeleton serves as a frame that supports the object, and is, for example, a structure formed by a plurality of bones joined at joints. The joint is a movable joint portion coupling a bone and a bone.

There is an increasing need for the skeleton estimation in fields of, for example, sports, healthcare, entertainment, and the like. For example, there is a system that estimates a skeleton of a performer in a gymnastics competition during performance from sensor data for the performer using the skeleton estimation technology, thereby performing technique recognition based on an estimation result of the skeleton to support scoring of the performance.

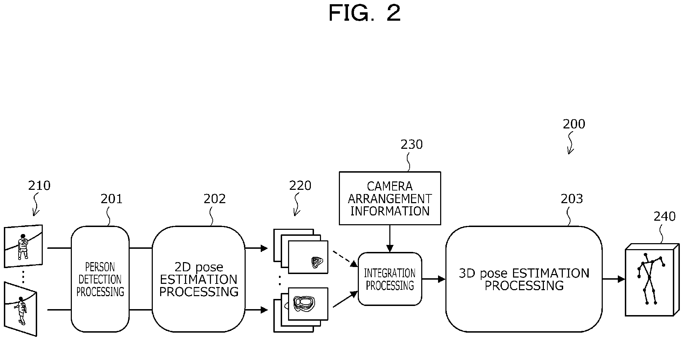

Here, an example of skeleton recognition processing for recognizing a skeleton of an object based on sensor data for the object will be described with reference to FIG. 2. Here, it is assumed that the object is a "person", and the sensor data is an "image obtained by capturing the object".

FIG. 2 is an explanatory diagram illustrating an example of the skeleton recognition processing. In FIG. 2, skeleton recognition processing 200 includes person detection processing 201, 2D pose estimation processing 202, and 3D pose estimation processing 203. The person detection processing 201 detects a person region from a plurality of images 210. The plurality of images 210 are images (multi-viewpoint images) obtained by capturing a person (object) from multiple viewpoints.

The 2D pose estimation processing 202 specifies positions of joints from the person region detected by the person detection processing 201. In the 2D pose estimation processing 202, a 2D heat map 220 is generated. The 2D heat map 220 represents, for example, a probability that the location is a joint in units of pixels in each image of the plurality of images 210.

The 3D pose estimation processing 203 integrates the 2D heat map 220 and camera arrangement information 230 to specify positions (coordinates) of joints of the person in a three-dimensional space. The camera arrangement information 230 indicates an arrangement position of each camera that has captured the plurality of images 210. In the 3D pose estimation processing 203, skeleton data 240 is generated.

The skeleton data 240 is information representing a skeleton (shape of a skeleton) of the person, and indicates

EP 4 418 202 A1

the positions of the joints forming the skeleton in the three-dimensional space. Note that, in the skeleton recognition processing 200, for example, processing is performed for the time-series images obtained by capturing the person, and the skeleton data 240 (time-series data) indicating a temporal change of the position of each joint in the three-dimensional space is generated. Specifically, for example, the skeleton data 240 is a set of frames indicating the position of each joint in the three-dimensional space at each time point.

Here, in the skeleton estimation for each frame, an error due to noise may occur. Therefore, in order to estimate a smooth movement, smoothing processing may be performed at a subsequent stage of the skeleton estimation. For example, it is difficult to quantitatively define a frequency characteristic of a movement of a gymnast. In such a case, a filter called a Savitzky-Golay smoothing filter may be applied.

The Savitzky-Golay smoothing filter is an example of a filter used for smoothing a signal which includes noise but in which a frequency range of a portion not including noise is wide. The Savitzky-Golay smoothing filter approximates time-series data with a polynomial within a window of a certain frame, and sets polynomial output as a smoothed value. Note that, for the Savitzky-Golay smoothing filter, for example, the following Non-Patent Document may be referred to.

Mendez, C.G.M., Mendez, S.H., Solis, A.L., Figueroa, H.V.R., Hernandez, A.M.: The effects of using a noise filter and feature selection in action recognition: an empirical study. In: International Conference on Mechatronics, Electronics and Automotive Engineering (ICMEAE), pp. 43 - 48 (2017)

However, noise of a skeleton is affected by a movement of a person. Therefore, it is desirable that characteristics of a smoothing filter is variable by a movement of a person. For example, in a case where a movement of a person is slow, it is desirable to reduce noise as much as possible by smoothing in a long frame. Taking an event of rings in a gymnastics competition as an example, when noise enters a stationary technique, there is a possibility that a stationary determination related to a score may not be made normally.

Furthermore, in a case where a movement of a person is fast, it may be better not to smooth a location where the movement is fast. For example, a spreading angle is important for a ring leap and a split/straddle jump in an event of a balance beam in a gymnastics competition. Therefore, for example, when smoothing at a joint of a foot is not removed, there is a possibility that the angle becomes smaller than that before the smoothing and a player is disadvantaged at the time of scoring.

In this way, when the smoothing processing is uniformly performed for entire skeleton data of a person (object), a movement that should originally appear may not be detected, and for example, performance that should originally be recognized may not be recognized. On the other hand, when the smoothing processing is not performed, accuracy of the skeleton estimation may deteriorate due to noise, and for example, a stationary state may not be accurately determined.

Note that it is conceivable to make, based on a deviation amount obtained by comparing edge data representing an entire skeleton of a performer between frames, a stationary determination on a rule basis (threshold value of a change of the edge data). However, since the determination is made for each single frame or between short frames, the determination is weak against noise, and it may be difficult to appropriately perform the stationary determination.

Furthermore, even in the same stationary technique, an allowable deviation amount may be different. For example, in a straddle planche and iron cross of the event of the rings, the deviation amount is smaller in the iron cross. Therefore, in accordance with a standard of the iron cross, it is not possible to appropriately perform the stationary determination of the straddle planche, and it is not possible to normally make a technique recognition determination and the like.

Furthermore, it is conceivable to perform label learning of a stationary state and a non-stationary state using a convolutional neural network (CNN) model with respect to edge data of an entire body and determine a smoothing application location. However, in this method, since the edge data of the entire body is labeled, it is not possible to determine, from a skeleton of a person, a location where smoothing should be performed or a location where smoothing should be removed.

Therefore, in the present embodiment, an information processing method for improving the accuracy of the skeleton estimation by controlling, according to a temporal change of a movement for each part of a skeleton of an object, a part to be smoothed in the skeleton represented by skeleton data will be described. Hereinafter, a processing example of the information processing device 101 will be described.

The information processing device 101 acquires skeleton data representing, in time series, a skeleton of an object recognized based on sensor data for the object. Here, the skeleton data is, for example, time-series data indicating a temporal change of a position of each joint point forming the skeleton of the object in the three-dimensional space. The joint point indicates, for example, a joint, a head, or the like.

The sensor data includes, for example, an image obtained by capturing the object. The skeleton data is generated by, for example, the skeleton recognition processing 200 as illustrated in FIG. 2. Furthermore, the sensor data may include information of a 3D motion sensor. The 3D motion sensor is attached to, for example, a joint, the head, or the like of the object, and may detect a position of an attachment location.

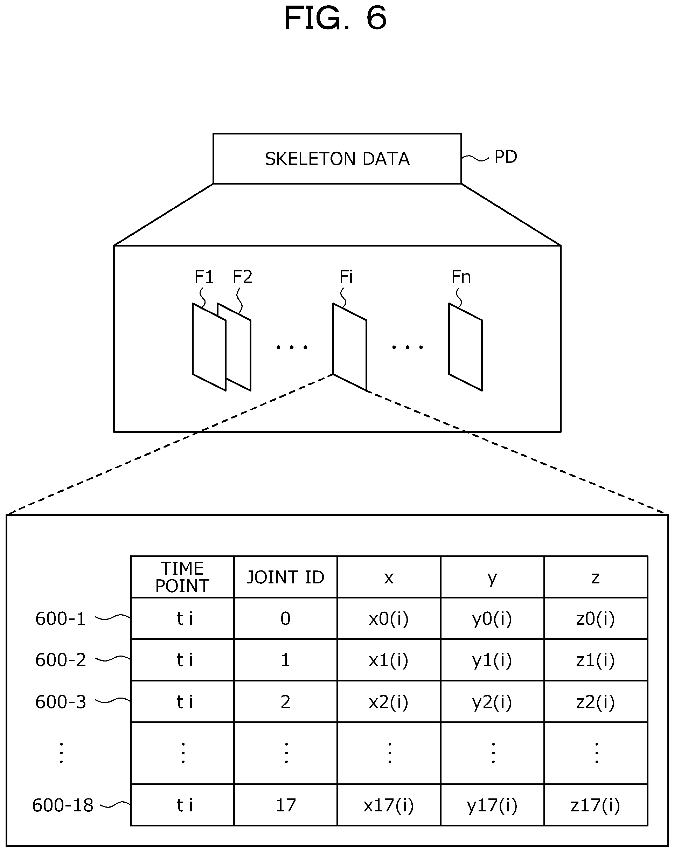

Note that, for example, the skeleton data may be generated by the information processing device 101 or may be generated by another computer different from the information processing device 101. A specific example of the skeleton data will be described later with reference to FIG. 6.

In the example of FIG. 1, a case is assumed where skeleton data 110 representing a skeleton of a performer 102 is acquired. The performer 102 is a player of a gymnastics competition. The skeleton data 110 represents the skeleton of the performer 102 recognized based on a plurality of images I obtained by capturing the performer 102. The skeleton data 110 is a set of frames indicating a position of each joint point of the performer 102 in the three-dimensional space at each time point.

For example, a frame 110-1 indicates a position of each joint point (in FIG. 1, white circle) of the performer 102 in the three-dimensional space at a certain time point. For example, a white circle 110-1-1 indicates a joint point of a right foot. A white circle 110-1-2 indicates a joint point of a right pelvis. A white circle 110-1-3 indicates a joint point of a left foot. A white circle 110-1-4 indicates a joint point of a left pelvis.

(2) The information processing device 101 calculates a feature amount representing a temporal change of a movement for each part of the skeleton of the object based on the acquired skeleton data. The part is, for example, the head, a right arm, a left arm, a right leg, a left leg, or the like. Which part of the skeleton of the object to focus on may be optionally set. For example, the right leg of the performer 102 corresponds to a portion from the right foot to the right pelvis. Furthermore, the left leg of the performer 102 corresponds to a portion from the left foot to the left pelvis.

The feature amount is information for capturing the movement of each part included in the skeleton of the object. The feature amount includes, for example, an angular acceleration between parts of the skeleton of the object based on a temporal change of a relative angle between the parts. The angular acceleration between the parts represents a change rate per unit time of an angular velocity between the parts, and may be said to be an index value capable of capturing an instantaneous movement of each part.

In the example of FIG. 1, a case is assumed where a feature amount 120 representing a temporal change of a movement of the skeleton of the performer 102 is calculated. The feature amount 120 includes an angular acceleration based on a temporal change of a relative angle between parts of the performer 102. Taking a left leg 131 and a right leg 132 as an example of a combination between the parts of the skeleton, the feature amount 120 includes, for example, an angular acceleration based on a temporal change of a relative angle between the left leg 131 and the right leg 132. It may be said that the angular acceleration between the left leg 131 and the right leg 132 is an index value capable of capturing an instantaneous movement of each of the legs 131 and 132.

(3) The information processing device 101 specifies an object part to be smoothed in the skeleton represented by the skeleton data based on the calculated feature amount. In other words, the information processing device 101 specifies a part excluded from the object to be smoothed in the skeleton represented by the skeleton data. Specifically, for example, the information processing device 101 may specify, as the object part to be smoothed, a part other than a part where the angular acceleration is equal to or greater than a first threshold value in the skeleton represented by the skeleton data.

The first threshold value may be optionally set. For example, the first threshold value is set to a value that makes it possible to determine that, when an angular acceleration between parts becomes equal to or greater than the first threshold value, instantaneous movements of the parts occur. It may be said that the part where it is determined that the instantaneous movement occurs is, for example, a location where smoothing should be removed so as to avoid that performance that should originally be recognized is not recognized and the player is disadvantaged. Therefore, the information processing device 101 excludes the part where the angular acceleration is equal to or greater than the first threshold value from the object to be smoothed.

In the example of FIG. 1, a case is assumed where only the angular acceleration between the left leg 131 and the right leg 132 of the performer 102 is equal to or greater than the first threshold value among angular accelerations between the parts of the performer 102 included in the feature amount 120. In this case, for example, the information processing device 101 specifies, as the object part, a part different from the left leg 131 and the right leg 132 in the skeleton represented by the skeleton data 110.

In this way, according to the information processing device 101, it is possible to improve the accuracy of the skeleton estimation by controlling, according to a temporal change of a movement for each part of a skeleton of an object, a part to be smoothed in the skeleton represented by skeleton data. For example, by excluding a part where an instantaneous movement (high-frequency movement) occurs from an object to be smoothed, it is possible to prevent a situation where performance that should be originally recognized is not recognized and a player is disadvantaged in a gymnastics competition or the like.

In the example of FIG. 1, the angular acceleration between the left leg 131 and the right leg 132 of the performer 102 is equal to or greater than the first threshold value, and it may be said that an instantaneous movement of each of the legs 131 and 132 occurs. Therefore, the information processing device 101 excludes the left leg 131 and the right leg 132 from the object to be smoothed in the skeleton of the performer 102, and sets other parts as object parts. Specifically, for example, when the smoothing processing for the skeleton data 110 is performed, the information processing device 101 excludes the left leg 131 and the right leg 132 from the object to be smoothed over a period of certain frames before and after the frame 110-1.

(System Configuration Example of Information Processing System 300)

Next, a system configuration example of an information processing system 300 including the information processing device 101 illustrated in FIG. 1 will be described. Here, a case will be taken as an example and described where the information processing device 101 illustrated in FIG. 1 is applied to a skeleton estimation device 301 in the information processing system 300. The information processing system 300 is applied to, for example, a system that supports scoring of competitions such as gymnastics and artistic swimming.

In the following description, a "performer" will be described as an example of an object for the skeleton estimation.

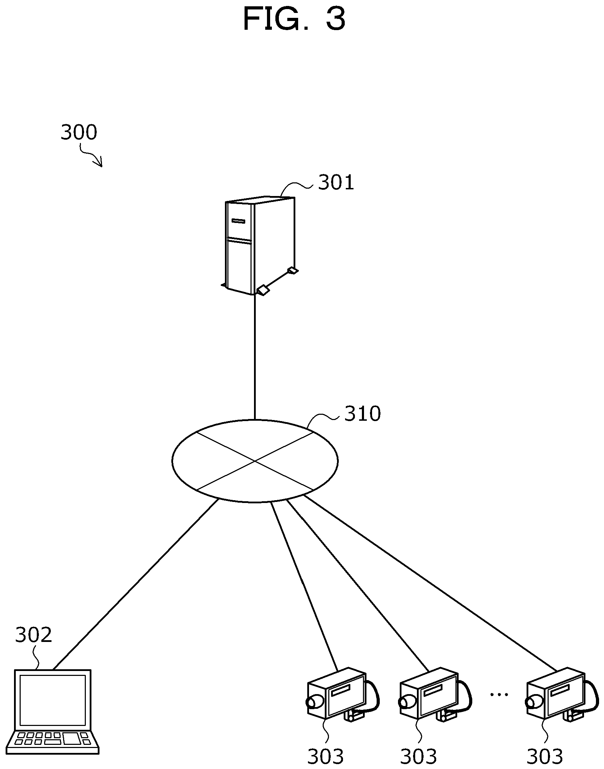

FIG. 3 is an explanatory diagram illustrating the system configuration example of the information processing system 300. In FIG. 3, the information processing system 300 includes the skeleton estimation device 301, a client device 302, and a plurality of camera terminals 303. In the information processing system 300, the skeleton estimation device 301, the client device 302, and the camera terminals 303 are coupled via a wired or wireless network 310. The network 310 is, for example, the Internet, a local area network (LAN), a wide area network (WAN), or the like.

Here, the skeleton estimation device 301 is a computer that estimates a skeleton of the performer. The performer is, for example, a performer in a gymnastics competition. The skeleton estimation device 301 is, for example, a server.

The client device 302 is a computer used by a user. The user is, for example, a judge who scores an object competition, a person who supports scoring by the judge, or the like. The client device 302 is, for example, a personal computer (PC), a tablet PC, or the like.

The camera terminal 303 is an image capturing device that captures an image (still image or moving image) and outputs image data. For example, the plurality of camera terminals 303 are installed at different positions in a competition site, and may capture images of the performer during performance from multiple viewpoints.

Note that, although the skeleton estimation device 301 and the client device 302 are separately provided here, the present embodiment is not limited to this. For example, the skeleton estimation device 301 may be implemented by the client device 302. Furthermore, the information processing system 300 may include a plurality of the client devices 302.

(Hardware Configuration Example of Skeleton Estimation Device 301)

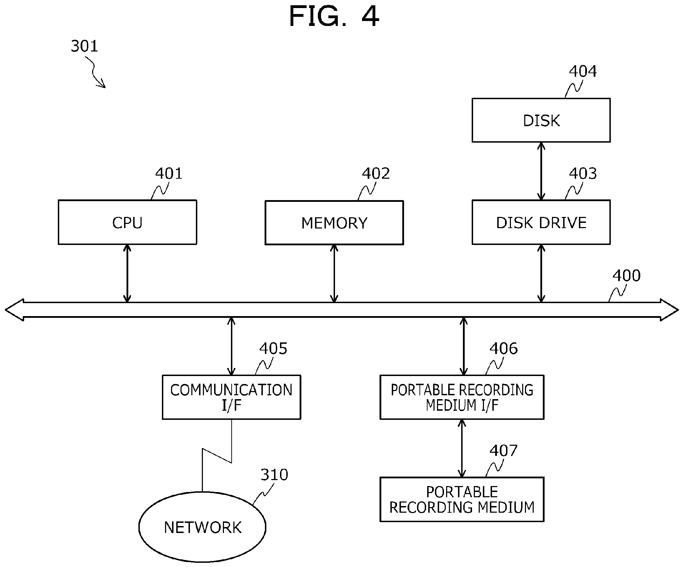

FIG. 4 is a block diagram illustrating a hardware configuration example of the skeleton estimation device 301. In FIG. 4, the skeleton estimation device 301 includes a central processing unit (CPU) 401, a memory 402, a disk drive 403, a disk 404, a communication interface (I/F) 405, a portable recording medium I/F 406, and a portable recording medium 407. Furthermore, the respective components are coupled to each other by a bus 400.

Here, the CPU 401 performs overall control of the skeleton estimation device 301. The CPU 401 may include a plurality of cores. The memory 402 includes, for example, a read only memory (ROM), a random access memory (RAM), a flash ROM, and the like. Specifically, for example, the flash ROM stores an OS program, the ROM stores application programs, and the RAM is used as a work area for the CPU 401. The programs stored in the memory 402 are loaded into the CPU 401 to cause the CPU 401 to execute coded processing.

The disk drive 403 controls reading/writing of data from/to the disk 404 under the control of the CPU 401. The disk 404 stores data written under the control of the disk drive 403. As the disk 404, for example, a magnetic disk, an optical disk, and the like are exemplified.

The communication I/F 405 is coupled to the network 310 through a communication line, and is coupled to an external computer (for example, the client device 302 and the camera terminals 303 illustrated in FIG. 3) via the network 310. Additionally, the communication I/F 405 manages an interface between the network 310 and the inside of the device, and controls input and output of data from the external computer. As the communication I/F 405, for example, a modem, a LAN adapter, or the like may be adopted.

The portable recording medium I/F 406 controls reading/writing of data from/to the portable recording medium 407 under the control of the CPU 401. The portable recording medium 407 stores data written under the control of the portable recording medium I/F 406. As the portable recording medium 407, for example, a compact disc (CD)-ROM, a digital versatile disk (DVD), a universal serial bus (USB) memory, and the like are exemplified.

Note that the skeleton estimation device 301 may include, for example, an input device, a display, or the like, as well as the components described above. Furthermore, the client device 302 and the camera terminals 303 illustrated in FIG. 3 may also be implemented by a hardware configuration similar to that of the skeleton estimation device 301. Note that the client device 302 includes, for example, an input device, a display, or the like as well as the components described above. Furthermore, the camera terminal 303 includes, for example, a camera, an input device, a display, or the like as well as the components described above.

(Joint Points Forming Skeleton of Performer)

Next, joint points forming a skeleton of a performer (object) will be described.

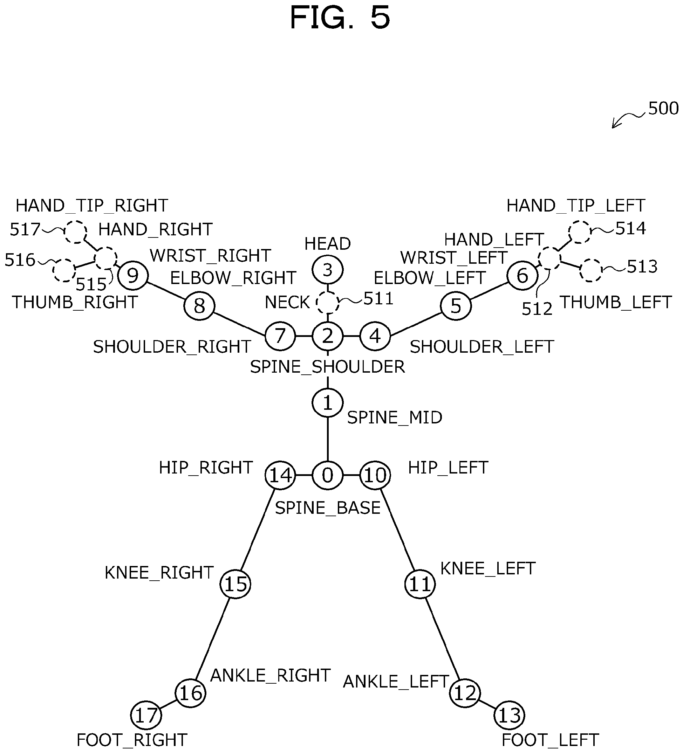

FIG. 5 is an explanatory diagram illustrating an example of joint points forming a skeleton. In FIG. 5, a skeleton 500 represents a skeleton of a performer, and includes a plurality of joint points and links. The joint point is a key point such as a joint or a head. The link is a coupling that couples joint points. In FIG. 5, the joint points are represented by solid circles or dotted circles. The links are represented by solid lines.

In the following description, 18 joint points indicated by solid circles in FIG. 5 will be described as an example of the plurality of joint points.

A number in the solid circle is a joint ID for identifying a joint point. A solid circle with a joint ID "0" indicates the center of a pelvis (hip). A solid circle with a joint ID "1" indicates a spine. A solid circle with a joint ID "2" indicates the center of a shoulder. A solid circle with a joint ID "3" indicates a head. A solid circle with a joint ID "4" indicates a left shoulder. A solid circle with a joint ID "5" indicates a left elbow. A solid circle with a joint ID "6" indicates a left wrist. A solid circle with a joint ID "7" indicates a right shoulder. A solid circle with a joint ID "8" indicates a right elbow.

A solid circle with a joint ID "9" indicates a right wrist. A solid circle with a joint ID "10" indicates a left pelvis. A solid circle with a joint ID "11" indicates a left knee. A solid circle with a joint ID "12" indicates a left ankle. A solid circle with a joint ID "13" indicates a left foot. A solid circle with a joint ID "14" indicates a right pelvis. A solid circle with a joint ID "15" indicates a right knee. A solid circle with a joint ID "16" indicates a right ankle. A solid circle with a joint ID "17" indicates a right foot.

Note that a dotted circle 511 indicates a neck. A dotted circle 512 indicates a left hand. A dotted circle 513 indicates a left thumb. A dotted circle 514 indicates a left hand tip. A dotted circle 515 indicates a right hand. A dotted circle 516 indicates a right thumb. A dotted circle 517 indicates a right hand tip.

(Data Structure Example of Skeleton Data)

Next, a data structure example of skeleton data will be described. Here, skeleton data generated based on images obtained by capturing a performer (object) by the camera terminals 303 illustrated in FIG. 3 will be described as an example.

FIG. 6 is an explanatory diagram illustrating a data structure example of skeleton data. In FIG. 6, skeleton data PD is information representing a skeleton of the performer (object) in time series, and includes frames F1 to Fn (n is a natural number of equal to or greater than 2). The frames F1 to Fn are time-series data indicating a temporal change of a position of each joint point forming the skeleton of the performer in the three-dimensional space at each of time points t1 to tn.

In the following description, an optional time point among the time points t1 to tn may be referred to as "time point ti" (i = 1, 2,..., n).

Here, a frame Fi indicates a position of each joint point forming the skeleton of the performer in the three-dimensional space at the time point ti. The frame Fi includes joint point data 600-1 to 600-18. Each piece of the joint point data 600-1 to 600-18 has items of time point, joint ID, x, y, and z.

The time point is information for identifying at which time point a joint point is. The time point corresponds to, for example, a date and time when images of the performer have been captured by the camera terminals 303 (see FIG. 3). The joint ID is an identifier for identifying a joint point forming the skeleton of the performer. The joint IDs correspond to the joint IDs "0" to "17" illustrated in FIG. 5. x, y, and z are coordinates indicating a position of a joint point identified by the joint ID in the three-dimensional space.

For example, the joint point data 600-1 indicates a position "x0(i), y0(i), z0(i)" of the joint point "center of the pelvis" with the joint ID "0" of the performer in the three-dimensional space at the time point ti. Note that, although not illustrated, the skeleton data PD includes, for example, information regarding links coupling the joint points.

(Functional Configuration Example of Skeleton Estimation Device 301)

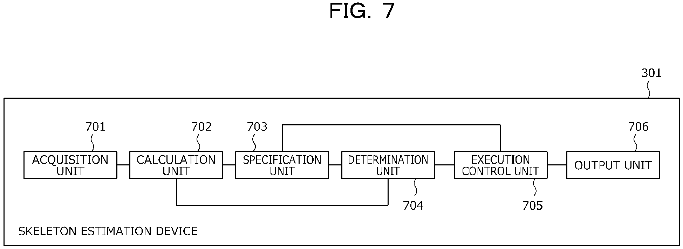

FIG. 7 is a block diagram illustrating a functional configuration example of the skeleton estimation device 301. In FIG. 7, the skeleton estimation device 301 includes an acquisition unit 701, a calculation unit 702, a specification unit 703, a determination unit 704, an execution control unit 705, and an output unit 706. The acquisition unit 701 to the output unit 706 have functions serving as a control unit, and specifically, for example, those functions are implemented by causing the CPU 401 to execute a program stored in a storage device such as the memory 402, the disk 404, or the portable recording medium 407 illustrated in FIG. 4 or by the communication I/F 405. A processing result of each functional unit is stored in, for example, a storage device such as the memory 402 or the disk 404.

The acquisition unit 701 acquires skeleton data representing a skeleton of a performer (object) in time series. The skeleton of the performer is a skeleton recognized based on sensor data for the performer. The sensor data includes, for example, images (multi-viewpoint images) obtained by capturing the performer by the plurality of camera terminals 303 illustrated in FIG. 3.

Specifically, for example, by receiving the skeleton data PD as illustrated in FIG. 6 from the client device 302 illustrated in FIG. 3, the acquisition unit 701 acquires the received skeleton data PD. Furthermore, the acquisition unit 701 may generate the skeleton data PD by performing the skeleton recognition processing based on the sensor data for the performer.

More specifically, for example, the acquisition unit 701 receives sensor data including images (multi-viewpoint images) obtained by capturing the performer from the client device 302. Note that the acquisition unit 701 may directly receive an image obtained by capturing the performer from each of the plurality of camera terminals 303. Then, by performing the skeleton recognition processing 200 as illustrated in FIG. 2 based on the received sensor data (multi-viewpoint images) to generate the skeleton data PD, the acquisition unit 701 may acquire the generated skeleton data PD.

In the following description, the "skeleton data PD (see FIG. 6)" will be described as an example of the skeleton data representing the skeleton of the performer (object) in time series.

The calculation unit 702 calculates a feature amount representing a temporal change of a movement for each part of the skeleton of the performer based on the acquired skeleton data PD. The part of the skeleton is a portion of the skeleton. The part includes a plurality of joint points in a joint point group forming the skeleton of the performer. Which part of the skeleton of the performer is to be processed may be optionally set.

For example, the part to be processed is set in consideration of what type of movement a person to be subjected to the skeleton estimation makes. In the case of a performer in a gymnastics competition, for example, a skeleton of the performer is divided into parts such as a head, a right arm, a left arm, a right leg, and a left leg. Note that, when the skeleton of the performer is divided into the plurality of parts, the skeleton may be divided so as to cover all in a joint point group forming the skeleton, or does not have to cover all in the joint point group.

The feature amount is, for example, information for capturing an instantaneous movement or standstill of each part. The feature amount may include, for example, an angular velocity between parts of the skeleton of the performer (object) based on a temporal change of a relative angle between the parts. Furthermore, the feature amount may include, for example, an angular acceleration between parts of the skeleton of the performer (object) based on a temporal change of a relative angle between the parts.

Here, a part of a skeleton will be described by taking a performer in a gymnastics competition as an example. Here, a case will be taken as an example and described where the skeleton of the performer is divided into five parts. Furthermore, since each part includes a plurality of joint points, each part may be referred to as a "part group".

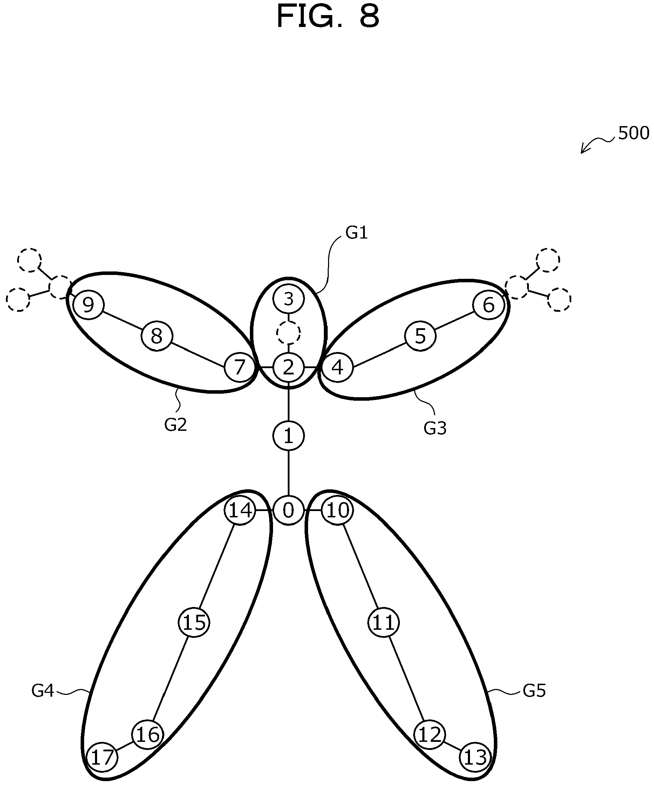

FIG. 8 is an explanatory diagram illustrating an example of parts of a skeleton. In FIG. 8, part groups G1 to G5 (five parts) included in the skeleton 500 are illustrated. The part group G1 corresponds to the part "head", and includes the joint point with the joint ID "2" and the joint point with the joint ID "3". The part group G2 corresponds to the part "right arm", and includes the joint point with the joint ID "7", the joint point with the joint ID "8", and the joint point with the joint ID "9".

The part group G3 corresponds to the part "left arm", and includes the joint point with the joint ID "4", the joint point with the joint ID °5", and the joint point with the joint ID "6". The part group G4 corresponds to the part "right leg", and includes the joint point with the joint ID "14", the joint point with the joint ID "15", the joint point with the joint ID "16", and the joint point with the joint ID "17". The part group G5 corresponds to the part "left leg", and includes the joint point with the joint ID "10", the joint point with the joint ID "11", the joint point with the joint ID "12", and the joint point with the joint ID "13".

Here, a specific processing example of calculating a feature amount representing a temporal change of a movement for each part will be described by taking the part groups G1 to G5 (five parts) illustrated in FIG. 8 as an example.

First, the calculation unit 702 defines directions of the respective part groups G1 to G5 (parts). Here, it is assumed that the direction of the part group G1 is a direction from the joint point (head) with the joint ID "3" to the joint point (center of the shoulder) with the joint ID "2". It is assumed that the direction of the part group G2 is a direction from the joint point (right wrist) with the joint ID "9" to the joint point (right shoulder) with the joint ID "7".

It is assumed that the direction of the part group G3 is a direction from the joint point (left wrist) with the joint ID "6" to the joint point (left shoulder) with the joint ID "4". It is assumed that the direction of the part group G4 is a direction from the joint point (right foot) with the joint ID "17" to the joint point (right pelvis) with the joint ID "14". It is assumed that the direction of the part group G5 is a direction from the joint point (left foot) with the joint ID "13" to the joint point (left pelvis) with the joint ID "10".

The calculation unit 702 calculates the directions of the respective parts (part groups G1 to G5) of the skeleton of the performer. Specifically, for example, the calculation unit 702 may calculate the direction $(e^\wedge_x, e^\wedge_y, e^\wedge_z)$ of each of the part groups G1 to G5 using the following Expression (1) based on the skeleton data PD. Note that $x_1$ indicates an x coordinate of a start point of each direction. $x_2$ indicates an x coordinate of an end point of each direction, $y_1$ indicates a y coordinate of the start point of each direction. $y_2$ indicates a y coordinate of the end point of each direction, $z_1$ indicates a z coordinate of the start point of each direction. $z_2$ indicates a z coordinate of the end point of each direction. e is represented by the following Expression (2). ^ indicates a hat symbol above e.

[Expression 1]

$$\hat{e}_x = \frac{x_2 - x_1}{|e|}, \hat{e}_y = \frac{y_2 - y_1}{|e|}, \hat{e}_z = \frac{z_2 - z_1}{|e|} \quad \cdots (1)$$

$$e = \sqrt{(x_2 - x_1)^2 + (y_2 - y_1)^2 + (z_2 - z_1)^2} \quad \cdots (2)$$

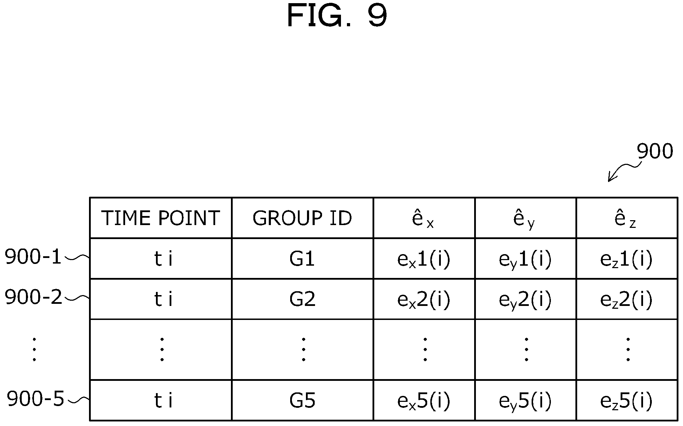

The direction of each of the part groups G1 to G5 is calculated for, for example, each frame Fi at each time point ti included in the skeleton data PD. As a result, the direction of each of the part groups G1 to G5 at each time point ti is calculated. The calculated directions of the respective part groups G1 to G5 are stored in, for example, an edge data table 900 as illustrated in FIG. 9. The edge data table 900 is implemented by, for example, a storage device such as the memory 402 or the disk 404.

FIG. 9 is an explanatory diagram illustrating an example of content stored in the edge data table 900. In FIG. 9, the edge data table 900 includes fields of time point, group ID, $e^\wedge_x$, $e^\wedge_y$, and $e^\wedge_z$, and stores pieces of edge data 900-1 to 900-5 as records by setting information in each field.

Here, the time point indicates a time point (for example, a date and time when images of the performer have been captured by the camera terminals 303) corresponding to edge data. The group ID is an identifier for identifying a part group (part). $e^\wedge_x$ indicates an x component of a direction of the part group. $e^\wedge_y$ indicates a y component of the direction of the part group. $e^\wedge_z$ indicates a z component of the direction of the part group.

For example, the edge data 900-1 indicates a direction "$e_x1(i)$, $e_y1(i)$, $e_z1(i)$" of the part group G1 at the time point ti.

Next, the calculation unit 702 calculates a relative angle between the parts based on the calculated direction between the parts (between the part groups). The relative angle between the parts corresponds to, for example, an angle formed by a direction of a certain part and a direction of another part. Specifically, for example, the calculation unit 702 may calculate the relative angle between the part groups using the following Expression (3) with reference to the edge data table 900 at each time point ti as illustrated in FIG. 9.

Note that $\theta_{p,q}$ indicates the relative angle between the part groups. $e^\wedge_{x,p}$ indicates an x component of a direction of one part group Gp. $e^\wedge_{x,q}$ indicates an x component of a direction of the other part group Gq. $e^\wedge_{y,p}$ indicates a y component of the direction of the one part group Gp. $e^\wedge_{y,q}$ indicates a y component of the direction of the other part group Gq. $e^\wedge_{z,p}$ indicates a z component of the direction of the one part group Gp. $e^\wedge_{z,q}$ indicates a z component of the direction of the other part group Gq.

[Expression 2]

$$\theta_{p,q} = Arccos\left(\hat{e}_{x,p}\hat{e}_{x,q} + \hat{e}_{y,p}\hat{e}_{y,q} + \hat{e}_{z,p}\hat{e}_{z,q}\right) \quad \cdots (3)$$

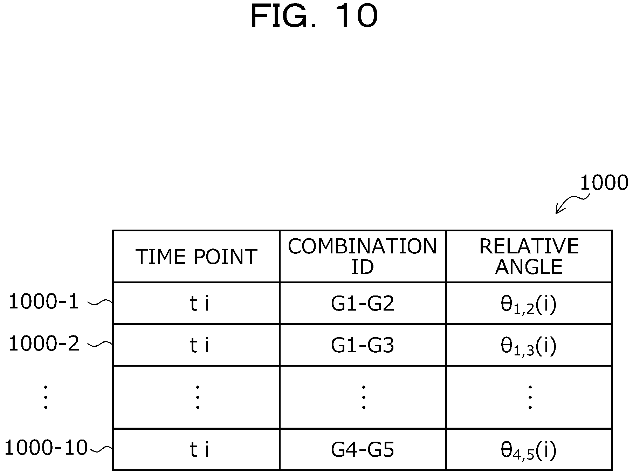

The relative angle between the part groups at each time point ti is calculated for, for example, each combination between the part groups. In the case of the part groups G1 to G5, there are 10 combinations between part groups (G1-G2, G1-G3, G1-G4, G1-G5, G2-G3, G2-G4, G2-G5, G3-G4, G3-G5, and G4-G5). The calculated relative angle between the part groups is stored in, for example, a relative angle table 1000 as illustrated in FIG. 10. The relative angle table 1000 is implemented by, for example, a storage device such as the memory 402 or the disk 404.

FIG. 10 is an explanatory diagram illustrating an example of content stored in the relative angle table 1000. In FIG. 10, the relative angle table 1000 includes fields of time point, combination ID, and relative angle, and stores pieces of relative angle data 1000-1 to 1000-10 as records by setting information in each field.

Here, the time point indicates a time point corresponding to relative angle data. The combination ID indicates a combination between part groups. The relative angle indicates a relative angle between the part groups. For example, the relative angle data 1000-1 indicates a relative angle $\theta_{1,2}(i)$ between the part group G1 and the part group G2 at the time point ti.

Next, the calculation unit 702 calculates an angular velocity between the parts based on the calculated relative angle between the parts (between the part groups). The angular velocity between the parts corresponds to an angle at which the parts rotate per unit time, and may be said to be one of index values for capturing movements of the parts. Specifically, for example, the calculation unit 702 may calculate the angular velocity between the part groups using the following Expression (4) with reference to the relative angle table 1000 at each time point ti as illustrated in FIG. 10.

Note that $\omega_{p,q}(t)$ indicates an angular velocity between the group Gp and the group Gq at the time point ti. $\theta_{p,q}(t)$ indicates a relative angle between the group Gp and the group Gq at the time point ti. $\theta_{p,q}(t-1)$ indicates a relative angle between the group Gp and the group Gq at a time point t(i - 1).

$$\omega_{p,q}(t) = \theta_{p,q}(t) - \theta_{p,q}(t-1) \ldots (4)$$

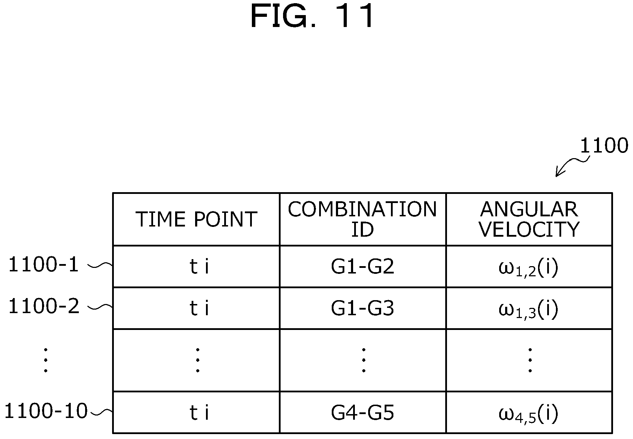

The angular velocity between the part groups is calculated for, for example, each combination between the part groups at each time point ti of the time points t2 to tn. The calculated angular velocity between the part groups is stored in, for example, an angular velocity table 1100 as illustrated in FIG. 11. The angular velocity table 1100 is implemented by, for example, a storage device such as the memory 402 or the disk 404.

FIG. 11 is an explanatory diagram illustrating an example of content stored in the angular velocity table 1100. In FIG. 11, the angular velocity table 1100 includes fields of time point, combination ID, and angular velocity, and stores pieces of angular velocity data 1100-1 to 1100-10 as records by setting information in each field.

Here, the time point indicates a time point corresponding to angular velocity data. The combination ID indicates a combination between part groups. The angular velocity indicates an angular velocity between the part groups. For example, the angular velocity data 1100-1 indicates an acceleration $\omega_{1,2}(i)$ between the part group G1 and the part group G2 at the time point ti.

Next, the calculation unit 702 calculates an angular acceleration between the parts based on the calculated angular velocity between the parts (between the part groups). The angular acceleration between the parts corresponds to a change of the angular velocity per unit time, and may be said to be one of index values for capturing movements of the parts. Specifically, for example, the calculation unit 702 may calculate the angular acceleration between the part groups using the following Expression (5) with reference to the angular velocity table 1100 at each time point ti as illustrated in FIG. 11.

Note that $\alpha_{p,q}(t)$ indicates an angular acceleration between the group Gp and the group Gq at the time point ti. $\omega_{p,q}(t)$ indicates an angular velocity between the group Gp and the group Gq at the time point ti. $\omega_{p,q}(t-1)$ indicates an angular velocity between the group Gp and the group Gq at the time point t(i - 1).

$$\alpha_{p,q}(t) = \omega_{p,q}(t) - \omega_{p,q}(t-1) \ldots (5)$$

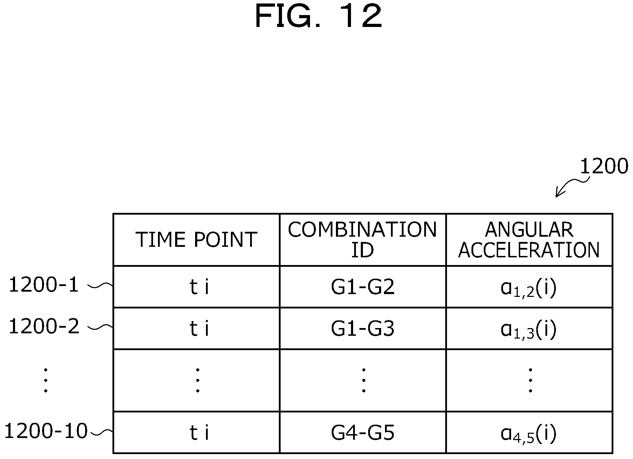

The angular acceleration between the part groups is calculated for, for example, each combination between the part groups at each time point ti of the time points t2 to tn. The calculated angular acceleration between the part groups is stored in, for example, an angular acceleration table 1200 as illustrated in FIG. 12. The angular acceleration table 1200 is implemented by, for example, a storage device such as the memory 402 or the disk 404.

FIG. 12 is an explanatory diagram illustrating an example of content stored in the angular acceleration table 1200. In FIG. 12, the angular acceleration table 1200 includes fields of time point, combination ID, and angular acceleration, and stores pieces of angular acceleration data 1200-1 to 1200-10 as records by setting information in each field.

Here, the time point indicates a time point corresponding to angular acceleration data. The combination ID indicates a combination between part groups. The angular acceleration indicates an angular acceleration between the part groups. For example, the angular acceleration data 1200-1 indicates an angular acceleration $\alpha_{1,2}(i)$ between the part group G1 and the part group G2 at the time point ti.

The specification unit 703 specifies an object part to be smoothed in the skeleton represented by the skeleton data PD based on the calculated feature amount. Specifically, for example, the specification unit 703 may specify, as the object part, a part other than a part where the calculated angular acceleration is equal to or greater than a first threshold value Th1 in the skeleton represented by the skeleton data PD.

In other words, the specification unit 703 specifies, as a part not to be smoothed, the part where the calculated angular acceleration is equal to or greater than the first threshold value Th1 in the skeleton represented by the skeleton data PD. The first threshold value Th1 may be optionally set, and for example, is set to a value that makes it possible to determine that, when the angular acceleration becomes equal to or greater than the first threshold value Th1, an instantaneous movement occurs.

More specifically, for example, the specification unit 703 specifies the object part with reference to the angular acceleration table 1200 at each time point ti as illustrated in FIG. 12. The object part is specified by, for example, specifying the time point ti at which smoothing is performed and the part to be smoothed in the skeleton represented in time series by the skeleton data PD.

For example, it is assumed that an angular acceleration $\alpha_{4,5}(i)$ indicated by the angular acceleration data 1200-10 in the angular acceleration table 1200 is equal to or greater than the first threshold value Th1. Furthermore, it is assumed that angular accelerations $\alpha_{1,3}(i)$ to $\alpha_{3,5}(i)$ indicated by the pieces of angular acceleration data 1200-1 to 1200-9 in the angular acceleration table 1200 are less than the first threshold value Th1.

A combination between part groups specified from a combination ID indicated by the angular acceleration data 1200-10 is the part group G4 and the part group G5. In this case, the specification unit 703 specifies a part other than the part groups G4 and G5 as the object part at the time point ti in the skeleton represented in time series by the skeleton data PD.

Here, the part group G4 is the part (right leg) including the joint point with the joint ID "14", the joint point with the joint ID "15", the joint point with the joint ID "16", and the joint point with the joint ID "17". The part group G5 is the part (left leg) including the joint point with the joint ID "10", the joint point with the joint ID "11", the joint point with the joint ID "12", and the joint point with the joint ID "13".

Therefore, the specification unit 703 specifies a part other than the right leg and the left leg in the skeleton of the performer as the object part at the time point ti. In this way, the specification unit 703 specifies the object part at each time point (for example, the time points t2 to tn). As a result, it is possible to exclude a part where an instantaneous movement occurs in the skeleton represented in time series by the skeleton data PD from the object to be smoothed.

Furthermore, for example, in a case where an angular acceleration $\alpha_{p,q}(i)$ is equal to or greater than the first threshold value Th1, the specification unit 703 may exclude the part groups Gp and Gq (for example, the part groups G4 and G5) in a certain period before and after the time point ti as a reference from the object to be smoothed. The certain period before and after may be optionally set, and is set to, for example, a period of about one second before and after (for certain frames before and after the object frame Fi).

Specifically, for example, the specification unit 703 excludes the part groups Gp and Gq in the object frame Fi at the time point ti and a certain number of frames before and after the object frame Fi from the object to be smoothed in the skeleton represented by the skeleton data PD. As a result, a part where an instantaneous movement is detected may be excluded from the object to be smoothed for a certain period before and after the movement.

The determination unit 704 determines a degree of smoothing to be applied to the object part based on the calculated feature amount. The object part is, for example, an object part specified by the specification unit 703. Note that the object part may be all the parts (for example, the part groups G1 to G5) included in the skeleton of the performer.

Specifically, for example, the determination unit 704 may determine the degree of smoothing to be applied to the object part based on an average value of angular velocities per certain section included in the calculated feature amount. The certain section may be optionally set, and is, for example, a period of about several seconds before and after the object time point ti.

The object time point ti is a time point used as a reference when the certain section is specified, and may be optionally set. For example, the object time point ti may be set for each section length of the certain section so that the certain sections do not overlap each other. Furthermore, the object time point ti may be set such that certain sections partially overlap each other.

More specifically, for example, the determination unit 704 calculates the average value of the angular velocities per certain section based on each object time point ti as a reference using the following Expression (6) with reference to the angular velocity table 1100 at each time point as illustrated in FIG. 11. The angular velocity is an angular velocity between parts (between part groups) including the object part.

Note that $\omega_{p,q}(t)_{ave}$ indicates an average value of angular velocities at the object time point ti. w indicates a window size. The window size is a width of a window in which smoothing is performed, and is represented by, for example, the number of frames. w is, for example, "w = 21". "w = 21" corresponds to a window size when a strong filter is applied.

[Expression 3]

$$\omega_{p,q}(t)_{ave} = \frac{\sum_{j=-(w-1)/2}^{(w-1)/2} \omega_{p,q}(j)}{w} \quad \ldots (6)$$

For example, it is assumed that the object time point ti is "time point t20", and w is "w = 21". In this case, $\omega_{p,q}(t20)_{ave}$ is an average of angular velocities $\omega_{p,q}(t10)$ to $\omega_{p,q}(t30)$ in a section of time points t10 to t30 between the part groups Gp and Gq.

Then, the determination unit 704 may determine a degree of smoothing to be applied to a part where the calculated average value of the angular velocities is equal to or smaller than a second threshold value Th2 in the skeleton represented by the skeleton data PD to be a degree higher than a part where the calculated average value of the angular velocities is greater than the second threshold value Th2.

Here, it is assumed that the degree of smoothing is represented by any value of "0", "1", and "2". The degree of smoothing becomes higher as the value increases. For example, a degree "0" indicates that smoothing is not performed. A degree "1" indicates that weak smoothing is performed. A degree "2" indicates that strong smoothing is performed.

For example, the determination unit 704 determines a degree of smoothing to be applied to a part other than the specified object part (the time point ti at which smoothing is not performed and a part not to be smoothed) in the skeleton of the performer as "0". Furthermore, the determination unit 704 determines a degree of smoothing to be applied to a part where the average value of the angular velocities is greater than the second threshold value Th2 (the part at the object time point ti) among the specified object parts as "1". Furthermore, the determination unit 704 determines a degree of smoothing to be applied to a part where the average value of the angular velocities is equal to or smaller than the second threshold value Th2 (the part at the object time point ti) among the specified object parts as "2".

Note that, in a case where all the parts included in the skeleton of the performer (for example, the part groups G1 to G5) are set as the object parts, the determination unit 704 may determine the degree of smoothing to be applied to the part where the average value of the angular velocities is greater than the second threshold value Th2 among all the parts included in the skeleton of the performer as "1". Furthermore, the determination unit 704 may determine the degree of smoothing to be applied to the part where the average value of the angular velocities is equal to or smaller than the second threshold value Th2 among all the parts as "2".

Furthermore, the determination unit 704 may specify a coefficient of a smoothing filter to be applied to a part of the skeleton represented by the skeleton data PD based on the calculated feature amount. The smoothing filter is a filter for performing smoothing by averaging processing or the like for removing noise. The smoothing filter is, for example, a Savitzky-Golay smoothing filter (SG filter). The SG filter has a feature of smoothing a movement while leaving a high frequency component.

The coefficient of the smoothing filter is a coefficient to be multiplied by a value of an object part of each frame when the smoothing processing for the skeleton data PD is performed. The value of the object part is a position (x, y, z) of each joint point included in the object part. The coefficient of the smoothing filter is specified according to, for example, the degree of smoothing determined based on the feature amount (the average value of the angular velocities).

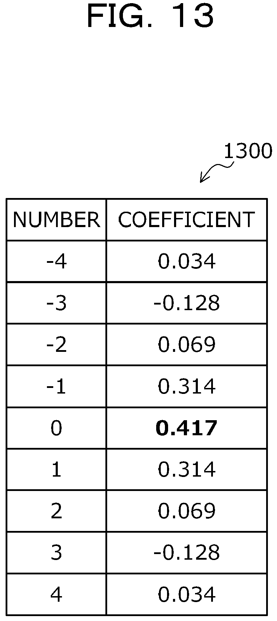

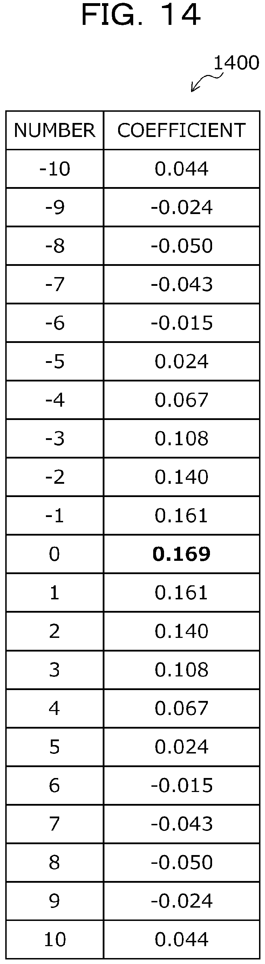

Here, the smoothing filter will be described with reference to FIGs. 13 and 14.

FIG. 13 is an explanatory diagram (part 1) illustrating an example of the smoothing filter. In FIG. 13, a smoothing filter 1300 indicates an SG filter in a case where the window size is "w = 9". Numbers "-4 to 4" are numbers for specifying a frame to be smoothed based on a number "0" frame as a reference.

The number "0" indicates a frame at the object time point ti. The number "-1" indicates a frame immediately before the object time point ti. The number "-2" indicates a frame two frames before the object time point ti. The number "-3" indicates a frame three frames before the object time point ti. The number "-4" indicates a frame four frames before the object time point ti.

The number "1" indicates a frame immediately after the object time point ti. The number "2" indicates a frame two frames after the object time point ti. The number "3" indicates a frame three frames after the object time point ti. The number "4" indicates a frame four frames after the object time point ti. The coefficient indicates a coefficient to be multiplied by a value of an object part of a frame corresponding to each number.

For example, a coefficient "0.417" of the number "0" indicates a coefficient to be multiplied by a value of an object part of a frame (object frame Fi) corresponding to the number "0". In this case, in the smoothing processing for the skeleton data PD, each of components x, y, and z of a position of each joint point included in the object part is multiplied by the coefficient "0.417".

Furthermore, a coefficient "0.034" of the number "-4" indicates a coefficient to be multiplied by a value of an object part of a frame (object frame F(i - 4)) corresponding to the number "-4". In this case, in the smoothing processing for the skeleton data PD, each of components x, y, and z of a position of each joint point included in the object part is multiplied by the coefficient "0.034".

FIG. 14 is an explanatory diagram (part 2) illustrating an example of the smoothing filter. In FIG. 14, a smoothing filter 1400 indicates an SG filter in a case where the window size is "w = 21". Numbers "-10 to 10" are numbers for specifying a frame to be smoothed based on a number "0" frame as a reference.

The number "0" indicates a frame at the object time point ti. For example, the number "-1" indicates a frame immediately before the object time point ti. Furthermore, the number "°-10" indicates a frame ten frames before the object time point ti. Furthermore, the number "1" indicates a frame immediately after the object time point ti. Furthermore, the number "10" indicates a frame ten frames after the object time point ti. The coefficient indicates a coefficient to be multiplied by a value of an object part of a frame corresponding to each number.

For example, a coefficient "0.169" of the number "0" indicates a coefficient to be multiplied by a value of an object part of a frame (object frame Fi) corresponding to the number "0". In this case, in the smoothing processing for the skeleton data PD, each of components x, y, and z of a position of each joint point included in the object part is multiplied by the coefficient "°0.169".

Furthermore, a coefficient "0.044" of the number "-10" indicates a coefficient to be multiplied by a value of an object part of a frame (object frame F(i - 10)) corresponding to the number "-10". In this case, in the smoothing processing for the skeleton data PD, each of components x, y, and z of a position of each joint point included in the object part is multiplied by the coefficient "0.044".

Specifically, for example, in a case where a degree of smoothing to be applied to an object part is "1" when the smoothing processing for the skeleton data PD is performed, the determination unit 704 specifies a coefficient of the smoothing filter 1300 illustrated in FIG. 13 as a coefficient of a smoothing filter to be applied to the object part. Furthermore, in a case where a degree of smoothing to be applied to an object part is "2" when the smoothing processing for the skeleton data PD is performed, the determination unit 704 specifies a coefficient of the smoothing filter 1400 illustrated in FIG. 14 as a coefficient of a smoothing filter to be applied to the object part.

The execution control unit 705 performs the smoothing processing for the skeleton data PD. At this time, for example, the execution control unit 705 performs smoothing for the specified object part in the skeleton represented by the skeleton data PD. For the smoothing for the object part, for example, a predetermined smoothing filter (for example, the smoothing filter 1300) may be used.

Furthermore, when the smoothing processing for the skeleton data PD is performed, the execution control unit 705 may perform smoothing of a determined degree for the object part in the skeleton represented by the skeleton data PD. Specifically, for example, the execution control unit 705 performs the smoothing for the object part using a coefficient of a smoothing filter specified according to the degree of smoothing.

More specifically, for example, in a case where the degree of smoothing to be applied to the object part is "1" when the smoothing processing for the skeleton data PD is performed, the execution control unit 705 performs smoothing for the object part using the specified smoothing filter 1300. Note that a time point excluded from the object to be smoothed may be included in a range (section corresponding to the window size) in which the smoothing filter 1300 is applied to the object part. In this case, the execution control unit 705 may not smooth the object part at that time point.

Furthermore, in a case where the degree of smoothing to be applied to the object part is "2" when the smoothing processing for the skeleton data PD is performed, the execution control unit 705 performs smoothing for the object part using the specified smoothing filter 1400. Note that a time point excluded from the object to be smoothed may be included in a range in which the smoothing filter 1400 is applied to the object part. In this case, the execution control unit 705 may not smooth the object part at that time point.

The output unit 706 outputs the skeleton data PD after the smoothing processing. An output format of the output unit 706 includes, for example, storage in a storage device such as the memory 402 or the disk 404, transmission to another computer by the communication I/F 405, display on a display (not illustrated), print output to a printer (not illustrated), and the like.

Specifically, for example, the output unit 706 may transmit the skeleton data PD subjected to the smoothing filter to the client device 302. As a result, a user may obtain smoothed 3D joint coordinates of a performer in a gymnastics competition or the like.

Note that the functional units (the acquisition unit 701 to the output unit 706) of the skeleton estimation device 301 described above may be implemented by a plurality of computers (for example, the skeleton estimation device 301 and the client device 302) in the information processing system 300.

Furthermore, the skeleton estimation device 301 may not include the determination unit 704 among the acquisition unit 701 to the output unit 706. In this case, the execution control unit 705 performs smoothing for the specified object part in the skeleton represented by the skeleton data PD using, for example, a predetermined smoothing filter (for example, the smoothing filter 1300).

Furthermore, the skeleton estimation device 301 may not include the specification unit 703 among the acquisition unit 701 to the output unit 706. In this case, for example, the execution control unit 705 smooths each part (object part) included in the skeleton represented by the skeleton data PD to a degree determined for each part.

(Skeleton Estimation Processing Procedure of Skeleton Estimation Device 301)

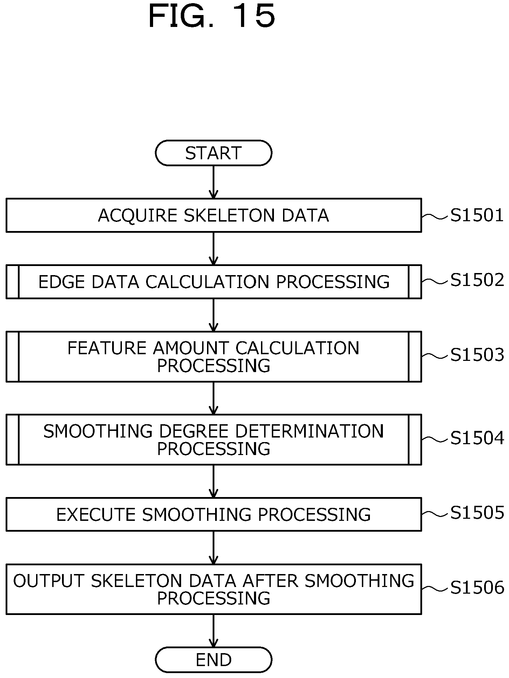

Next, a skeleton estimation processing procedure of the skeleton estimation device 301 will be described with reference to FIG. 15.

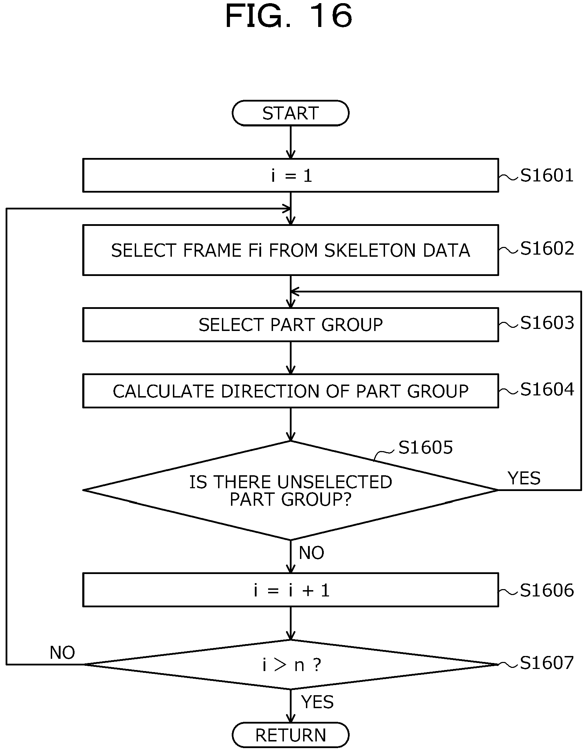

FIG. 15 is a flowchart illustrating an example of the skeleton estimation processing procedure of the skeleton estimation device 301. In the flowchart of FIG. 15, first, the skeleton estimation device 301 acquires the skeleton data PD representing a skeleton of a performer (object) in time series (step S1501). Then, the skeleton estimation device 301 executes edge data calculation processing based on the acquired skeleton data PD (step S1502). A specific processing procedure of the edge data calculation processing will be described later with reference to FIG. 16.

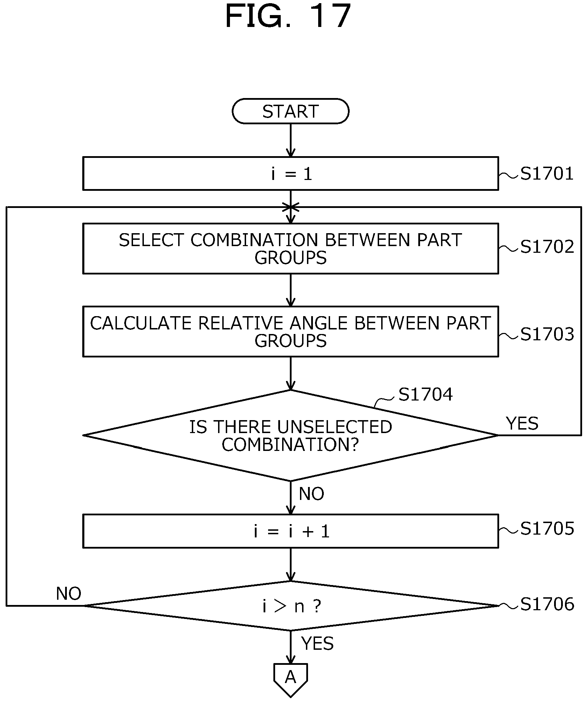

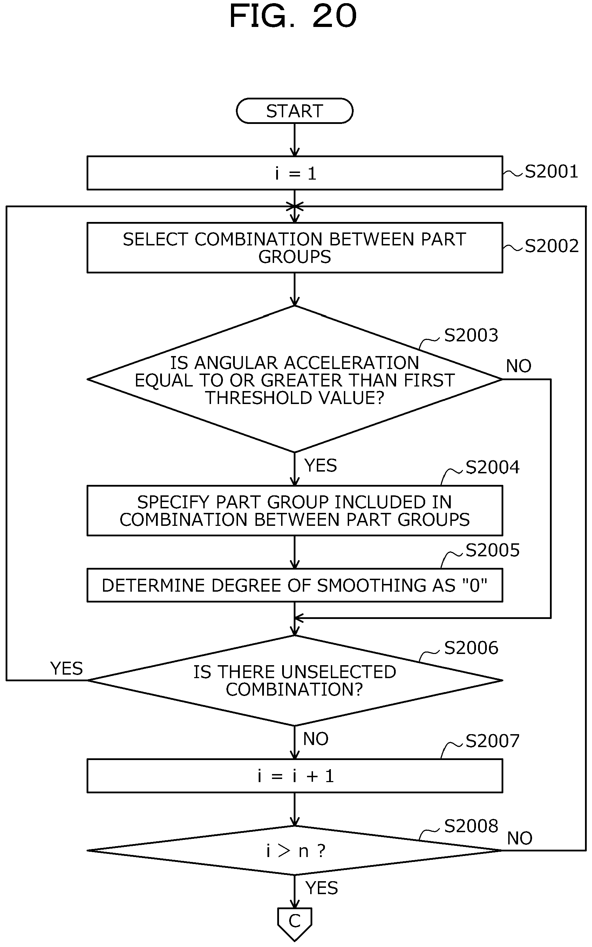

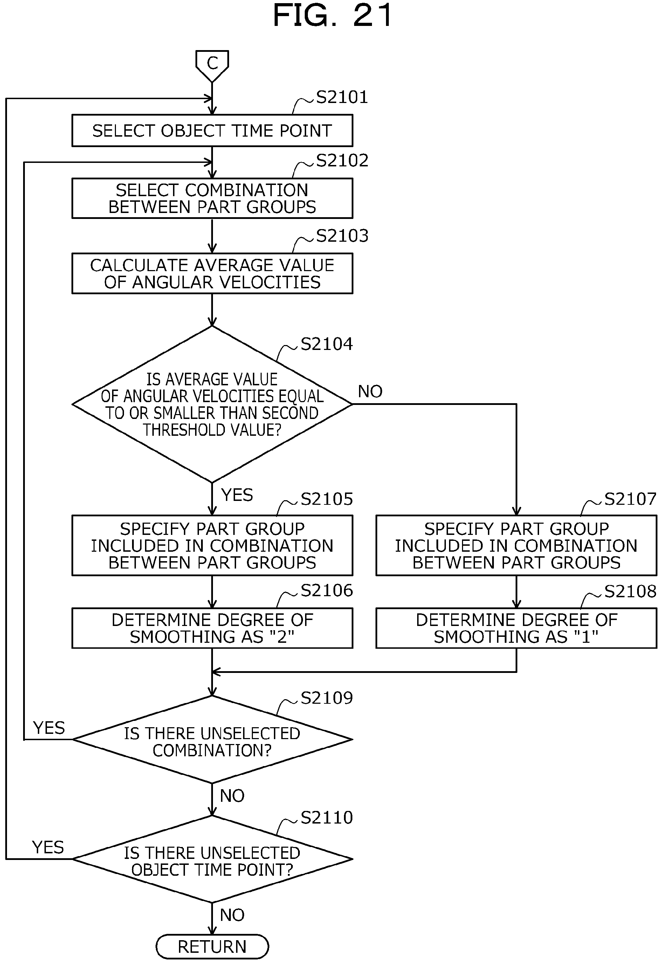

Next, the skeleton estimation device 301 executes feature amount calculation processing based on calculated edge data (step S1503). A specific processing procedure of the feature amount calculation processing will be described later with reference to FIGs. 17 to 19. Then, the skeleton estimation device 301 executes smoothing degree determination processing based on a calculated feature amount (step S1504). A specific processing procedure of the smoothing degree determination processing will be described later with reference to FIGs. 20 and 21.

Next, the skeleton estimation device 301 executes the smoothing processing for the skeleton data PD (step S1505). At this time, the skeleton estimation device 301 performs smoothing according to a degree determined in step S1504 for each part (each of the part groups G1 to G5) of the performer.

Then, the skeleton estimation device 301 outputs the skeleton data PD after the smoothing processing (step S1506), and ends the series of processing according to the present flowchart. As a result, it is possible to output smoothed 3D joint coordinates of a performer or the like in a gymnastics competition.

Next, the specific processing procedure of the edge data calculation processing in step S1502 indicated in FIG. 15 will be described with reference to FIG. 16. In the following description, the part groups G1 to G5 illustrated in FIG. 8 will be described as examples of parts included in the skeleton of the performer.

FIG. 16 is a flowchart illustrating an example of the specific processing procedure of the edge data calculation processing. In the flowchart of FIG. 16, first, the skeleton estimation device 301 sets "i" at the time point ti to "i = 1" (step S1601), and selects the frame Fi from the skeleton data PD (step S1602).

Next, the skeleton estimation device 301 selects an unselected part group that is not selected from the part groups G1 to G5 (step S1603). Then, the skeleton estimation device 301 calculates a direction of the selected part group based on the selected frame Fi (step S1604).

Next, the skeleton estimation device 301 determines whether or not there is an unselected part group that is not selected from the part groups G1 to G5 (step S1605). Here, in a case where there is an unselected part group (step S1605: Yes), the skeleton estimation device 301 returns to step S1603.

On the other hand, in a case where there is no unselected part group (step S1605: No), the skeleton estimation device 301 increments "i" (step S1606), and determines whether or not "i" is greater than "n" (step S1607). Here, in a case where "i" is equal to or smaller than "n" (step S1607: No), the skeleton estimation device 301 returns to step S1602.

On the other hand, in a case where "i" is greater than "n" (step S1607: Yes), the skeleton estimation device 301 returns to the step in which the edge data calculation processing has been called.

As a result, it is possible to calculate the directions of the respective parts (part groups G1 to G5) included in the skeleton of the performer. Note that the calculated directions of the respective parts (part groups G1 to G5) are stored in, for example, the edge data table 900 as illustrated in FIG. 9.

Next, the specific processing procedure of the feature amount calculation processing in step S1503 indicated in FIG. 15 will be described with reference to FIGs. 17 to 19.

FIGs. 17 to 19 are flowcharts illustrating an example of the specific processing procedure of the feature amount calculation processing. In the flowchart of FIG. 17, first, the skeleton estimation device 301 sets "i" at the time point ti to "i = 1" (step S1701). Next, the skeleton estimation device 301 selects a combination between unselected part groups that are not selected among the part groups G1 to G5 at the time point ti (step S1702).

Then, the skeleton estimation device 301 calculates a relative angle between the selected part groups with reference to the edge data table 900 at the time point ti (step S1703). Next, the skeleton estimation device 301 determines whether or not there is a combination between unselected part groups among the part groups G1 to G5 at the time point ti (step S1704).

Here, in a case where there is a combination between unselected part groups (step S1704: Yes), the skeleton estimation device 301 returns to step S1702. On the other hand, in a case where there is no combination between unselected part groups (step S1704: No), the skeleton estimation device 301 increments "i" (step S1705).

Then, the skeleton estimation device 301 determines whether or not "i" is greater than "n" (step S1706). Here, in a case where "i" is equal to or smaller than "n" (step S1706: No), the skeleton estimation device 301 returns to step S1702.

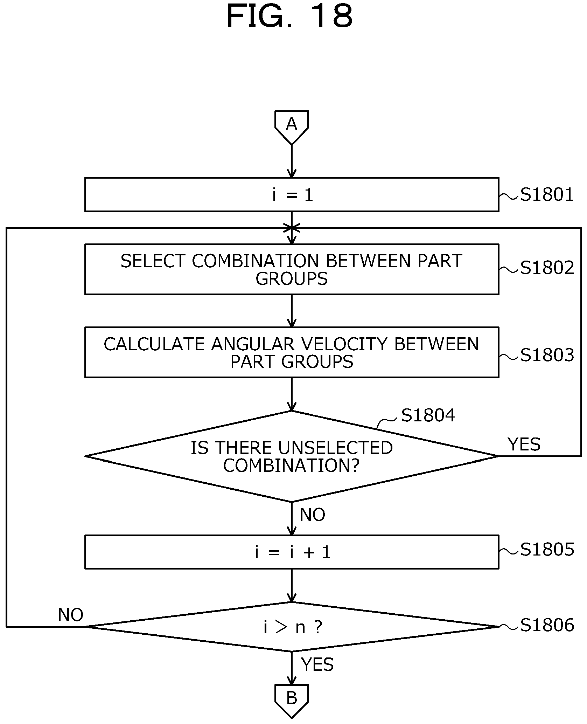

On the other hand, in a case where "i" is greater than "n" (step S1706: Yes), the skeleton estimation device 301 proceeds to step S1801 illustrated in FIG. 18. Note that the calculated relative angle between the part groups is stored in, for example, the relative angle table 1000 as illustrated in FIG. 10.

In the flowchart of FIG. 18, first, the skeleton estimation device 301 sets "i" at the time point ti to "i = 1" (step S1801). Next, the skeleton estimation device 301 selects a combination between unselected part groups that are not selected among the part groups G1 to G5 at the time point ti (step S1802).

Then, the skeleton estimation device 301 calculates an angular velocity between the selected part groups with reference to the relative angle table 1000 at the time points ti and t(i - 1) (step S1803). Note that, in a case where information for calculating the angular velocity is not prepared, the skeleton estimation device 301 skips step S1803.

Next, the skeleton estimation device 301 determines whether or not there is a combination between unselected part groups among the part groups G1 to G5 at the time point ti (step S1804). Here, in a case where there is a combination between unselected part groups (step S1804: Yes), the skeleton estimation device 301 returns to step S1802.

On the other hand, in a case where there is no combination between unselected part groups (step S1804: No), the skeleton estimation device 301 increments "i" (step S1805). Then, the skeleton estimation device 301 determines whether or not "i" is greater than "n" (step S1806).

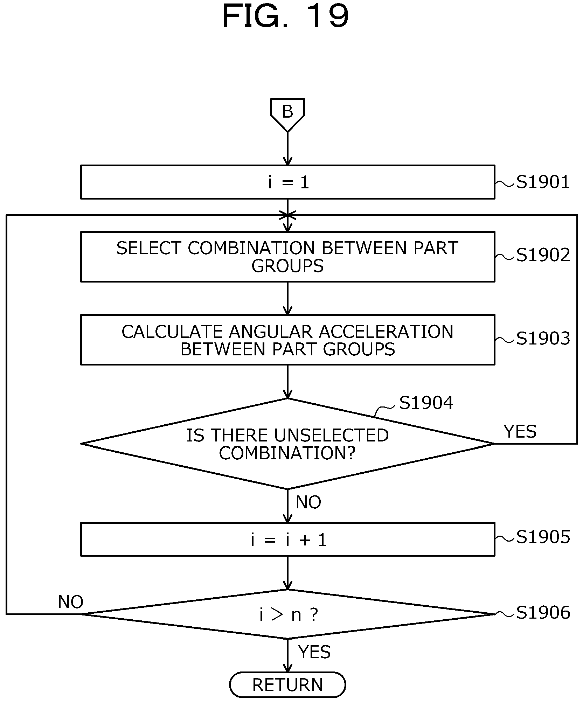

Here, in a case where "i" is equal to or smaller than "n" (step S1806: No), the skeleton estimation device 301 returns to step S1802. On the other hand, in a case where "i" is greater than "n" (step S1806: Yes), the skeleton estimation device 301 proceeds to step S1901 illustrated in FIG. 19. Note that the calculated angular velocity between the part groups is stored in, for example, the angular velocity table 1100 as illustrated in FIG. 11.

In the flowchart of FIG. 19, first, the skeleton estimation device 301 sets "i" at the time point ti to "i = 1" (step S1901). Next, the skeleton estimation device 301 selects a combination between unselected part groups that are not selected among the part groups G1 to G5 at the time point ti (step S1902).

Then, the skeleton estimation device 301 calculates an angular acceleration between the selected part groups with reference to the angular velocity table 1100 at the time points ti and t(i - 1) (step S1903). Note that, in a case where information for calculating the angular acceleration is not prepared, the skeleton estimation device 301 skips step S1903.

Next, the skeleton estimation device 301 determines whether or not there is a combination between unselected part groups among the part groups G1 to G5 at the time point ti (step S1904). Here, in a case where there is a combination between unselected part groups (step S1904: Yes), the skeleton estimation device 301 returns to step S1902.

On the other hand, in a case where there is no combination between unselected part groups (step S1904: No), the skeleton estimation device 301 increments "i" (step S1905). Then, the skeleton estimation device 301 determines whether or not "i" is greater than "n" (step S1906).

Here, in a case where "i" is equal to or smaller than "n" (step S1906: No), the skeleton estimation device 301 returns to step S1902. On the other hand, in a case where "i" is greater than "n" (step S1906: Yes), the skeleton estimation device 301 returns to the step in which the feature amount calculation processing has been called. Note that the calculated angular acceleration between the part groups is stored in, for example, the angular acceleration table 1200 as illustrated in FIG. 12.

As a result, it is possible to calculate a feature amount for capturing movements of the respective parts (part groups G1 to G5) of the skeleton of the performer.

Next, the specific processing procedure of the smoothing degree determination processing in step S1504 indicated in FIG. 15 will be described with reference to FIGs. 20 and 21.

FIGs. 20 and 21 are flowcharts illustrating an example of the specific processing procedure of the smoothing degree determination processing. In the flowchart of FIG. 20, first, the skeleton estimation device 301 sets "i" at the time point ti to "i = 1" (step S2001). Next, the skeleton estimation device 301 selects a combination between unselected part groups that are not selected among the part groups G1 to G5 at the time point ti (step S2002).

Then, the skeleton estimation device 301 determines whether or not an angular acceleration between the selected part groups is equal to or greater than the first threshold value Th1 with reference to the angular acceleration table 1200 at the time point ti (step S2003). Here, in a case where the angular acceleration is less than the first threshold value Th1 (step S2003: No), the skeleton estimation device 301 proceeds to step S2006.

On the other hand, in a case where the angular acceleration is equal to or greater than the first threshold value Th1 (step S2003: Yes), the skeleton estimation device 301 specifies a part group included in the selected combination between the part groups (step S2004). The processing in step S2004 corresponds to the processing of specifying a part not to be smoothed in the skeleton represented by the skeleton data PD.

Then, for the specified part group, the skeleton estimation device 301 determines a degree of smoothing in the object frame Fi at the time point ti and a certain number of frames before and after the object frame Fi as "0" (step S2005). Note that, in step S2005, in a case where a degree of smoothing in a certain frame has been determined for the part group, the skeleton estimation device 301 does not change the degree of smoothing in the frame.

Next, the skeleton estimation device 301 determines whether or not there is a combination between unselected part groups among the part groups G1 to G5 at the time point ti (step S2006). Here, in a case where there is a combination between unselected part groups (step S2006: Yes), the skeleton estimation device 301 returns to step S2002.

On the other hand, in a case where there is no combination between unselected part groups (step S2006: No), the skeleton estimation device 301 increments "i" (step S2007). Then, the skeleton estimation device 301 determines whether or not "i" is greater than "n" (step S2008).

Here, in a case where "i" is equal to or smaller than "n" (step S2008: No), the skeleton estimation device 301 returns to step S2002. On the other hand, in a case where "i" is greater than "n" (step S2008: Yes), the skeleton estimation device 301 proceeds to step S2101 illustrated in FIG. 21.

In the flowchart of FIG. 21, first, the skeleton estimation device 301 selects an unselected object time point ti among a plurality of object time points set in advance (step S2101). Next, the skeleton estimation device 301 selects a combination between unselected part groups that are not selected among the part groups G1 to G5 at the object time point ti (step S2102).

Then, with reference to the angular velocity table 1100 for a certain section based on the object time point ti as a reference, the skeleton estimation device 301 calculates an average value of angular velocities per certain section between the selected part groups (step S2103). Next, the skeleton estimation device 301 determines whether or not the calculated average value of the angular velocities is equal to or smaller than the second threshold value Th2 (step S2104).

Here, in a case where the average value of the angular velocities is equal to or smaller than the second threshold value Th2 (step S2104: Yes), the skeleton estimation device 301 specifies a part group included in the selected combination between the part groups (step S2105). The processing in step S2105 corresponds to the processing of specifying an object part to be smoothed in the skeleton represented by the skeleton data PD.

Then, for the specified part group, the skeleton estimation device 301 determines a degree of smoothing in the object frame Fi at the object time point ti as "2" (step S2106), and proceeds to step S2109. Note that, in step S2106, in a case where the degree of smoothing in the object frame Fi has been determined for the part group, the skeleton estimation device 301 does not change the degree of smoothing in the object frame Fi.

Furthermore, in a case where the average value of the angular velocities is greater than the second threshold value Th2 in step S2104 (step S2104: No), the skeleton estimation device 301 specifies a part group included in the selected combination between the part groups (step S2107). The processing in step S2107 corresponds to the processing of specifying an object part to be smoothed in the skeleton represented by the skeleton data PD.

Then, for the specified part group, the skeleton estimation device 301 determines a degree of smoothing in the object frame Fi at the object time point ti as "1" (step S2108). Note that, in step S2108, in a case where the degree of smoothing in the object frame Fi has been determined for the part group, the skeleton estimation device 301 does not change the degree of smoothing in the object frame Fi.

Next, the skeleton estimation device 301 determines whether or not there is a combination between unselected part groups among the part groups G1 to G5 at the object time point ti (step S2109). Here, in a case where there is a combination between unselected part groups (step S2109: Yes), the skeleton estimation device 301 returns to step S2102.

On the other hand, in a case where there is no combination between unselected part groups (step S2109: No), the skeleton estimation device 301 determines whether or not there is an unselected object time point among the plurality of object time points set in advance (step S2110).

Here, in a case where there is an unselected object time point (step S2110: Yes), the skeleton estimation device 301 returns to step S2101. On the other hand, in a case where there is no unselected object time point (step S2110: No), the skeleton estimation device 301 returns to the step in which the smoothing degree determination processing has been called.

As a result, it is possible to determine the degree of smoothing to be applied to the respective parts (respective part groups G1 to G5) of the performer.

(Estimation Result of Skeleton)

Next, an estimation result of a skeleton of a performer will be described.

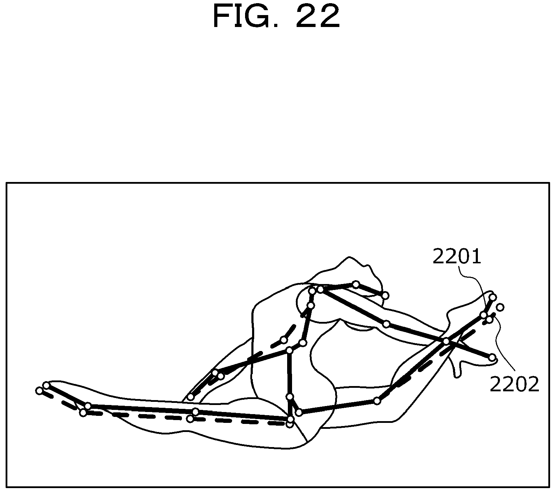

FIG. 22 is an explanatory diagram illustrating an example of an estimation result of a skeleton of a performer (balance beam). In FIG. 22, estimation results 2201 and 2202 are estimation results of the skeleton during performance of a ring leap in the balance beam by the performer in a gymnastics competition. Here, a case is assumed where it is determined as "success in technique" in a determination by a judge.

The estimation result 2201 (corresponding to a solid line) represents the skeleton after the smoothing processing by the skeleton estimation device 301, and is an estimation result in a case where smoothing of a right leg portion in the skeleton of the performer is not performed. The estimation result 2202 (corresponding to a dotted line) is an estimation result in a case where smoothing is performed for all parts of the skeleton of the performer (NG example due to an error in smoothing).

In the ring leap in the balance beam, an uppermost position of a foot of the performer is important. In the estimation result 2201, a smoothing filter is not applied to a foot portion of the right leg, and the foot portion of the actual right leg of the performer is accurately estimated. Therefore, when technique recognition processing is performed for the estimation result 2201, the same result as the result by the judge (success in the technique of the ring leap) is obtained.

On the other hand, in the estimation result 2202, a smoothing filter is applied to the foot portion of the right leg, and the foot portion is slightly lower than that of the actual right leg of the performer. Therefore, when the technique recognition processing is performed for the estimation result 2202, it is simply determined as a split jump, and a result different from the result by the judge (failure in the technique) is obtained.

In this way, it is found that, in the ring leap in the balance beam, it is better not to apply the smoothing filter to the foot of the performer in order to conform to the determination by the judge. According to the skeleton estimation device 301, it is possible to exclude a part where an instantaneous movement occurs from an object to be smoothed.

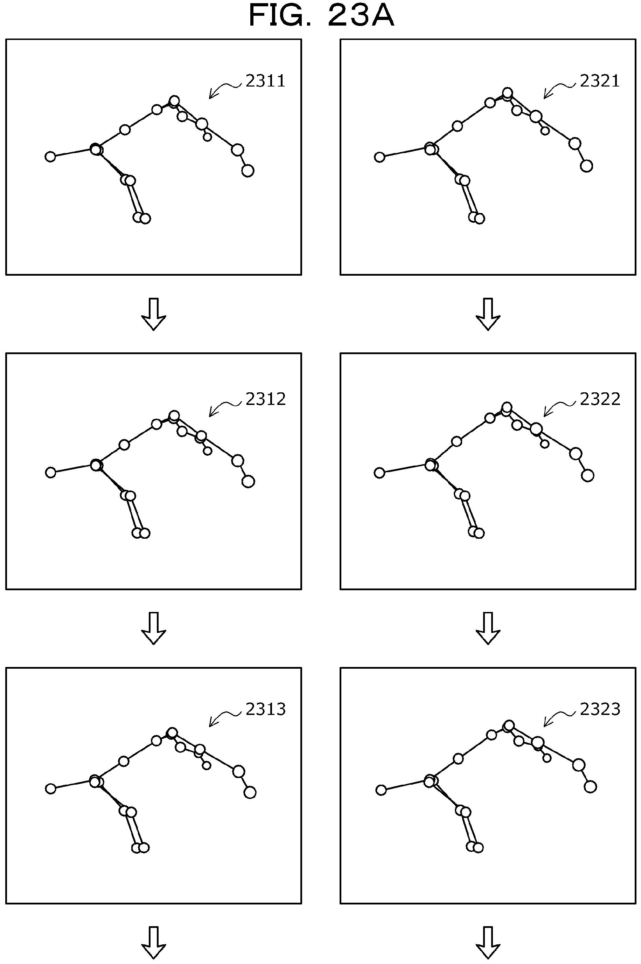

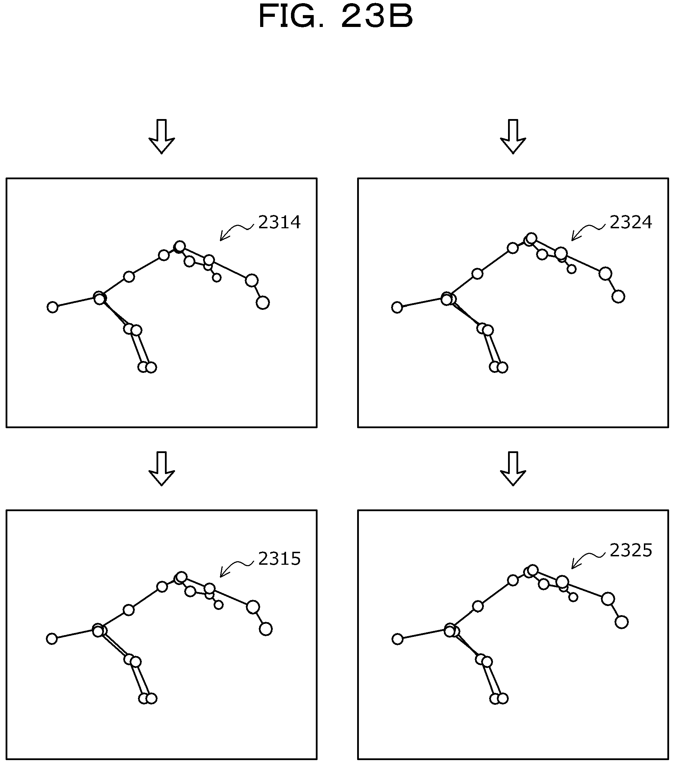

FIGs. 23A and 23B are explanatory diagrams illustrating an example of an estimation result of a skeleton of a performer (rings). In FIGs. 23A and 23B, estimation results 2311 to 2315 and 2321 to 2325 are estimation results for each frame representing a skeleton in time series during performance of a planche in the rings by the performer in a gymnastics competition. Each of the estimation results 2311 to 2315 is an estimation result at the same time point as that of each of the estimation results 2321 to 2325. For example, the estimation result 2311 and the estimation result 2321 are estimation results at the same time point.

Here, a case is assumed where it is determined as "success in technique" in a determination by a judge.

The estimation results 2311 to 2315 (left side) are estimation results in a case where weak smoothing is performed for all parts of the skeleton of the performer (NG example due to an error in smoothing). The estimation results 2321 to 2325 (right side) represent the skeleton after the smoothing processing by the skeleton estimation device 301, and are estimation results in a case where strong smoothing is performed for a stationary portion of the skeleton of the performer.

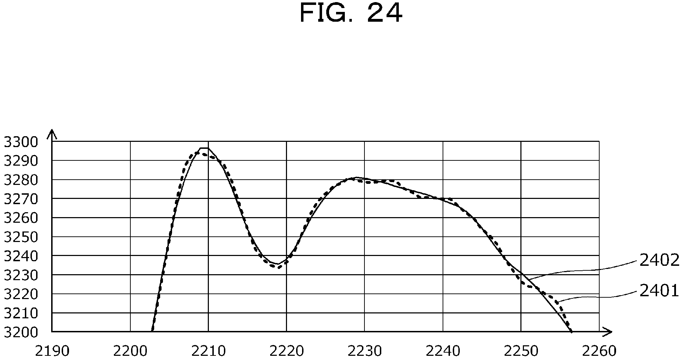

Here, a temporal change of a position of a joint point of the performer will be described with reference to FIG. 24. Here, a temporal change of a z coordinate of a left foot of the performer will be described as an example.

FIG. 24 is an explanatory diagram illustrating the temporal change of the z coordinate of the left foot. In FIG. 24, a graph 2401 corresponds to the estimation results 2311 to 2315 illustrated in FIG. 23, and illustrates the temporal change of the z coordinate of the left foot of the performer in a case where weak smoothing is applied. A graph 2402 corresponds to the estimation results 2321 to 2325 illustrated in FIG. 23, and illustrates the temporal change of the z coordinate of the left foot of the performer in a case where strong smoothing is applied. Note that a horizontal axis indicates a lapse of time in FIG. 24. Furthermore, a vertical axis indicates the z coordinate.

Comparing the graph 2401 (dotted line) with the graph 2402 (solid line), it is found that a deviation amount in the z coordinate of the left foot is greater in the estimation results 2311 to 2315 (weak smoothing) since noise has not been able to be appropriately removed.

Here, in a planche in the rings, the deviation amount of the performer is important. In the estimation results 2311 to 2315, since noise has not been able to be appropriately removed, a movement amount for each frame exceeds a threshold value defined in a technique recognition rule. Therefore, when the technique recognition processing is performed for the estimation results 2311 to 2315, a result different from a result by the judge (NG in standstill) is obtained.

On the other hand, in the estimation results 2321 to 2325, since noise has been able to be appropriately removed, the movement amount for each frame falls below the threshold value defined in the technique recognition rule. Therefore, when the technique recognition processing is performed for the estimation results 2321 to 2325, a result same as the result by the judge (OK in standstill) is obtained.

In this way, it is found that, in the planche in the rings, it is better to apply strong smoothing to a stationary portion of the skeleton of the performer in order to conform to the determination by the judge. According to the skeleton estimation device 301, it is possible to perform stronger smoothing for a part where a stationary operation occurs than other parts.

(Specific Example of Technique Recognition Result)

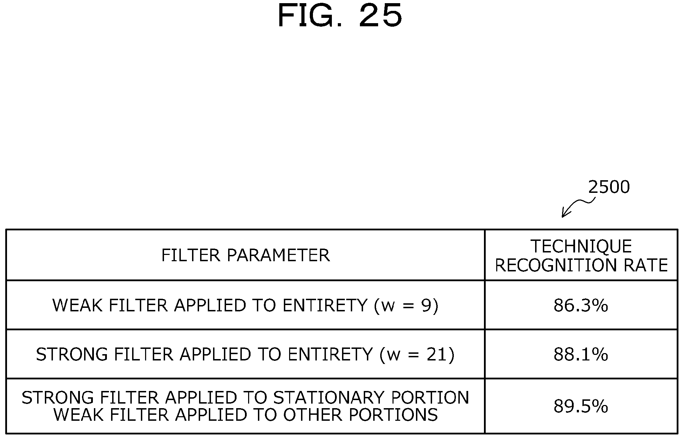

FIG. 25 is an explanatory diagram illustrating a specific example of a technique recognition result. In FIG. 25, a technique recognition result 2500 indicates a technique recognition rate in a case where technique recognition is performed for the skeleton data PD of performance of rings. The technique recognition rate indicates a rate at which the same result as a result by a judge is obtained. The technique recognition rate is "86.3%" in a case where a weak filter (w = 9) is applied to an entire skeleton of a performer.

The technique recognition rate is °88.1%" in a case where a strong filter (w = 21) is applied to the entire skeleton of the performer. Furthermore, the technique recognition rate is "89.5%" in a case where the smoothing processing by the skeleton estimation device 301 is executed, the strong filter (w = 21) is applied to a stationary portion of the skeleton of the performer, and the weak filter (w = 9) is applied to other portions.

In this way, by switching the filter according to a movement of a part, it is possible to perform the technique recognition with higher accuracy than in the case of performing the technique recognition with a single filter.

As described above, according to the skeleton estimation device 301 of the embodiment, it is possible to acquire the skeleton data PD representing, in time series, a skeleton of a performer (object) recognized based on sensor data for the performer. Then, according to the skeleton estimation device 301, it is possible to calculate a feature amount representing a temporal change of a movement for each part of the skeleton of the performer based on the acquired skeleton data PD, and specify an object part to be smoothed in the skeleton represented by the skeleton data PD based on the calculated feature amount. The part of the skeleton includes, for example, a plurality of joint points in a joint point group forming the skeleton of the performer (for example, the part groups G1 to G5). The skeleton data PD is, for example, time-series data indicating a temporal change of a position of each joint point forming the skeleton of the performer in a three-dimensional space.

As a result, the skeleton estimation device 301 may improve accuracy of skeleton estimation by controlling a part to be smoothed in the skeleton represented by the skeleton data PD according to the temporal change of the movement for each part of the skeleton of the performer. Furthermore, the skeleton estimation device 301 may accurately capture a fine movement of the performer by focusing on the part including the plurality of joint points in the joint point group forming the skeleton of the performer.

Furthermore, according to the skeleton estimation device 301, it is possible to calculate a feature amount including an angular acceleration between parts of the skeleton of the performer based on a temporal change of a relative angle between the parts, and specify, as the object part, a part other than a part where the angular acceleration is equal to or greater than the first threshold value Th1 in the skeleton represented by the skeleton data PD.

As a result, the skeleton estimation device 301 may exclude a part where an instantaneous movement (high-frequency movement) occurs from the object to be smoothed. For example, it is possible to exclude, from the object to be smoothed, a part including a joint of a foot that moves vigorously when performance such as a ring leap or a split/straddle jump in a balance beam in a gymnastics competition is performed.

Furthermore, according to the skeleton estimation device 301, it is possible to calculate a feature amount including an angular velocity between parts of the skeleton of the performer based on a temporal change of a relative angle between the parts, and determine a degree of smoothing to be applied to the object part based on an average value of the angular velocities (angular velocity average) per certain section included in the feature amount. For example, the skeleton estimation device 301 determines a degree of smoothing to be applied to an object part where the angular velocity average is equal to or smaller than the second threshold value Th2 in the skeleton represented by the skeleton data PD to be a degree higher than an object part where the angular velocity average is greater than the second threshold value Th2.

As a result, the skeleton estimation device 301 may perform stronger smoothing for a part where a stationary operation (low-frequency movement) occurs than other parts. For example, when a stationary technique such as a planche or iron cross in rings in a gymnastics competition is performed, strong smoothing may be performed for a slowly changing part. For example, in a case where an SG filter is applied, there is a feature that noise may be effectively removed by smoothing in a long frame. Therefore, in a case where the SG filter is applied, the skeleton estimation device 301 may adjust the degree of smoothing by switching a window size.

Furthermore, according to the skeleton estimation device 301, when the smoothing processing for the skeleton data PD is performed, it is possible to perform smoothing for the specified object part in the skeleton represented by the skeleton data PD.

As a result, the skeleton estimation device 301 may prevent a characteristic movement of the performer from being impaired, by removing smoothing at a location where the movement is fast while reproducing a smooth movement of the performer by the smoothing processing. For example, it is possible to avoid a situation where performance that should be originally recognized is not recognized, by removing the smoothing of a part including a joint of a foot when performance such as a ring leap or a split/straddle jump is performed.

Furthermore, according to the skeleton estimation device 301, it is possible to perform, when the smoothing processing for the skeleton data PD is performed, smoothing of a determined degree for the specified object part in the skeleton represented by the skeleton data PD.

As a result, when a smooth movement of the performer is reproduced by the smoothing processing, the skeleton estimation device 301 may effectively reduce noise by applying strong smoothing to a slowly changing part.

Furthermore, according to the skeleton estimation device 301, it is possible to acquire sensor data including images obtained by capturing the performer and generate the skeleton data PD representing the skeleton of the performer recognized from the images included in the acquired sensor data.

As a result, the skeleton estimation device 301 may acquire the skeleton data PD representing the skeleton of the performer from the images (multi-viewpoint images) obtained by capturing the performer with the camera terminals 303 or the like.

Furthermore, according to the skeleton estimation device 301, it is possible to acquire the skeleton data PD representing, in time series, the skeleton of the performer recognized based on the sensor data for the performer. Then, according to the skeleton estimation device 301, it is possible to calculate the feature amount representing the temporal change of the movement for each part of the skeleton of the performer based on the acquired skeleton data PD, and specify a coefficient of a smoothing filter to be applied to a part of the skeleton represented by the skeleton data PD based on the calculated feature amount.

As a result, by switching a coefficient of the SG filter according to the temporal change of the movement for each part of the skeleton of the performer, the skeleton estimation device 301 may control a degree of smoothing to be applied to the part.

From these facts, according to the skeleton estimation device 301, when the skeleton of the performer is estimated from the images (multi-viewpoint images) obtained by capturing the performer or the like, it is possible to accurately estimate the skeleton of the performer by removing the smoothing following a quick movement of the performer or effectively removing noise during a stationary operation. As a result, it is possible to improve technique recognition accuracy in a gymnastics competition or the like, and for example, it is possible to support scoring of a judge or implement automatic scoring by a computer.

Note that the information processing method described in the present embodiment may be implemented by executing a program prepared in advance in a computer such as a personal computer or a workstation. The present information processing program is recorded in a computer-readable recording medium such as a hard disk, a flexible disk, a CD-ROM, a DVD, or a USB memory, and is read from the recording medium to be executed by a computer. Furthermore, the present information processing program may be distributed via a network such as the Internet.

Furthermore, the information processing device 101 (skeleton estimation device 301) described in the present embodiment may also be implemented by a special-purpose IC such as a standard cell or a structured application specific integrated circuit (ASIC) or a programmable logic device (PLD) such as an FPGA.

CITATION LIST

PATENT DOCUMENT

Patent Document 1: Japanese Laid-open Patent Publication No. 2020-52867
Patent Document 2: International Publication Pamphlet No. WO 2012/046392

REFERENCE SIGNS LIST

101 Information processing device

102 Performer

110, 240, PD Skeleton data

120 Feature amount

200 Skeleton recognition processing

300 Information processing system

301 Skeleton estimation device

302 Client device

303 Camera terminal

310 Network

400 Bus

401 CPU

402 Memory

403 Disk drive

404 Disk

405 Communication I/F

406 Portable recording medium I/F

407 Portable recording medium

500 Skeleton

701 Acquisition unit

702 Calculation unit

703 Specification unit

704 Determination unit

705 Execution control unit

706 Output unit

900 Edge data table

1000 Relative angle table

1100 Angular velocity table

1200 Angular acceleration table

1300, 1400 Smoothing filter

2201, 2202, 2311, 2312, 2313, 2314, 2315, 2321, 2322, 2323, 2324, 2325 Estimation result

2401, 2402 Graph

2500 Technique recognition result

**Claims**

1. An information processing program for causing a computer to execute processing comprising:

   acquiring skeleton data that represents, in time series, a skeleton of an object recognized based on sensor data for the object;
   calculating a feature amount that represents a temporal change of a movement for each part of the skeleton of the object based on the acquired skeleton data; and
   specifying an object part to be smoothed in the skeleton represented by the skeleton data based on the calculated feature amount.

2. The information processing program according to claim 1, wherein

   the feature amount includes an angular acceleration between parts of the skeleton of the object based on a temporal change of a relative angle between the parts, and
   in the processing of specifying,
   a part other than a part where the angular acceleration is equal to or greater than a first threshold value in the skeleton represented by the skeleton data is specified as the object part.

3. The information processing program according to claim 1, wherein

   the feature amount includes an angular velocity between parts of the skeleton of the object based on a temporal change of a relative angle between the parts, and
   the information processing program further causes the computer to execute processing of
   determining a degree of smoothing to be applied to the specified object part based on an average value of the angular velocities per certain section included in the feature amount.

4. The information processing program according to claim 3, wherein,

   in the processing of determining,
   a degree of smoothing to be applied to an object part where the average value of the angular velocities is equal to or smaller than a second threshold value in the skeleton represented by the skeleton data is determined to be a degree higher than an object part where the average value of the angular velocities is greater than the second threshold value.

5.  The information processing program according to claim 1, for causing the computer to further execute processing of, when smoothing processing for the skeleton data is performed, performing smoothing for the specified object part in the skeleton represented by the skeleton data.

6.  The information processing program according to claim 3, for causing the computer to further execute processing of, when smoothing processing for the skeleton data is performed, performing smoothing of the determined degree for the specified object part in the skeleton represented by the skeleton data.

7.  The information processing program according to claim 1, wherein the part includes a plurality of joint points in a joint point group that forms the skeleton of the object.

8.  The information processing program according to claim 1, wherein the skeleton data is time-series data that indicates a temporal change of a position of each joint point that forms the skeleton of the object in a three-dimensional space.

9.  The information processing program according to claim 1, wherein the object is a performer.

10. The information processing program according to claim 1, wherein

    the sensor data includes an image obtained by capturing the object, and
    in the processing of acquiring,
    by generating the skeleton data that represents the skeleton of the object recognized from the image included in the sensor data, the generated skeleton data is acquired.

11. An information processing program for causing a computer to execute processing comprising:

    acquiring skeleton data that represents, in time series, a skeleton of an object recognized based on sensor data for the object;
    calculating a feature amount that represents a temporal change of a movement for each part of the skeleton of the object based on the acquired skeleton data; and
    specifying a coefficient of a smoothing filter to be applied to a part of the skeleton represented by the skeleton data based on the calculated feature amount.

12. An information processing method implemented by a computer, the method comprising:

    acquiring skeleton data that represents, in time series, a skeleton of an object recognized based on sensor data for the object;
    calculating a feature amount that represents a temporal change of a movement for each part of the skeleton of the object based on the acquired skeleton data; and
    specifying an object part to be smoothed in the skeleton represented by the skeleton data based on the calculated feature amount.

13. An information processing method implemented by a computer, the method comprising:

    acquiring skeleton data that represents, in time series, a skeleton of an object recognized based on sensor data for the object;
    calculating a feature amount that represents a temporal change of a movement for each part of the skeleton of the object based on the acquired skeleton data; and
    specifying a coefficient of a smoothing filter to be applied to a part of the skeleton represented by the skeleton data based on the calculated feature amount.

14. An information processing apparatus comprising a control unit configured to perform processing comprising:

    acquiring skeleton data that represents, in time series, a skeleton of an object recognized based on sensor data for the object;
    calculating a feature amount that represents a temporal change of a movement for each part of the skeleton of the object based on the acquired skeleton data; and

specifying an object part to be smoothed in the skeleton represented by the skeleton data based on the calculated feature amount.

15. An information processing apparatus comprising a control unit configured to perform processing comprising:

acquiring skeleton data that represents, in time series, a skeleton of an object recognized based on sensor data for the object;
calculating a feature amount that represents a temporal change of a movement for each part of the skeleton of the object based on the acquired skeleton data; and
specifying a coefficient of a smoothing filter to be applied to a part of the skeleton represented by the skeleton data based on the calculated feature amount.

# FIG. 1

# FIG. 2

# FIG. 3

# FIG. 4

301

404

DISK

401

402

403

| CPU | | MEMORY | | DISK DRIVE |

400

405

406

| COMMUNICATION I/F | | PORTABLE RECORDING MEDIUM I/F |

310

407

NETWORK

| PORTABLE RECORDING MEDIUM |

# FIG. 5

500

HAND_TIP_RIGHT
517 HAND_RIGHT
HEAD
HAND_TIP_LEFT
HAND_LEFT 514
516 WRIST_RIGHT (3) HAND_LEFT WRIST_LEFT
9 ELBOW_RIGHT NECK 511 ELBOW_LEFT (6) 513
515 8 THUMB_RIGHT (5) 512 THUMB_LEFT
THUMB_RIGHT 7 (2) (4)
SHOULDER_RIGHT SPINE_SHOULDER SHOULDER_LEFT

1 SPINE_MID

HIP_RIGHT 14 0 10 HIP_LEFT
SPINE_BASE

KNEE_RIGHT 15 11 KNEE_LEFT

ANKLE_RIGHT ANKLE_LEFT
16 12
17 13
FOOT_RIGHT FOOT_LEFT

# FIG. 6

SKELETON DATA $\sim$ PD

F1 F2 ... Fi ... Fn

| | TIME POINT | JOINT ID | x | y | z |
|---|---|---|---|---|---|
| 600-1 | t i | 0 | x0(i) | y0(i) | z0(i) |
| 600-2 | t i | 1 | x1(i) | y1(i) | z1(i) |
| 600-3 | t i | 2 | x2(i) | y2(i) | z2(i) |
| ⋮ | ⋮ | ⋮ | ⋮ | ⋮ | ⋮ |
| 600-18 | t i | 17 | x17(i) | y17(i) | z17(i) |

FIG. 7

301

| ACQUISITION UNIT | CALCULATION UNIT | SPECIFICATION UNIT | DETERMINATION UNIT | EXECUTION CONTROL UNIT | OUTPUT UNIT |

701 702 703 706

704 705

SKELETON ESTIMATION DEVICE

# FIG. 8

# FIG. 9

| TIME POINT | GROUP ID | $\hat{e}_x$ | $\hat{e}_y$ | $\hat{e}_z$ |
|---|---|---|---|---|
| t i | G1 | $e_x1(i)$ | $e_y1(i)$ | $e_z1(i)$ |
| t i | G2 | $e_x2(i)$ | $e_y2(i)$ | $e_z2(i)$ |
| ⋮ | ⋮ | ⋮ | ⋮ | ⋮ |
| t i | G5 | $e_x5(i)$ | $e_y5(i)$ | $e_z5(i)$ |

900

900-1
900-2
900-5

# FIG. 10

1000

| TIME POINT | COMBINATION ID | RELATIVE ANGLE |
|---|---|---|
| t i | G1-G2 | $\theta_{1,2}(i)$ |
| t i | G1-G3 | $\theta_{1,3}(i)$ |
| ⋮ | ⋮ | ⋮ |
| t i | G4-G5 | $\theta_{4,5}(i)$ |

1000-1

1000-2

1000-10

# FIG. 11

1100

| TIME POINT | COMBINATION ID | ANGULAR VELOCITY |
|---|---|---|
| t i | G1-G2 | $\omega_{1,2}(i)$ |
| t i | G1-G3 | $\omega_{1,3}(i)$ |
| ⋮ | ⋮ | ⋮ |
| t i | G4-G5 | $\omega_{4,5}(i)$ |

1100-1
1100-2
1100-10

# FIG. 12

1200

| TIME POINT | COMBINATION ID | ANGULAR ACCELERATION |
|---|---|---|
| t i | G1-G2 | $a_{1,2}(i)$ |
| t i | G1-G3 | $a_{1,3}(i)$ |
| ⋮ | ⋮ | ⋮ |
| t i | G4-G5 | $a_{4,5}(i)$ |

1200-1

1200-2

1200-10

# FIG. 13

1300

| NUMBER | COEFFICIENT |
|--------|-------------|
| -4 | 0.034 |
| -3 | -0.128 |
| -2 | 0.069 |
| -1 | 0.314 |
| 0 | **0.417** |
| 1 | 0.314 |
| 2 | 0.069 |
| 3 | -0.128 |
| 4 | 0.034 |

# FIG. 14

1400

| NUMBER | COEFFICIENT |
|:------:|:-----------:|
| -10 | 0.044 |
| -9 | -0.024 |
| -8 | -0.050 |
| -7 | -0.043 |
| -6 | -0.015 |
| -5 | 0.024 |
| -4 | 0.067 |
| -3 | 0.108 |
| -2 | 0.140 |
| -1 | 0.161 |
| 0 | **0.169** |
| 1 | 0.161 |
| 2 | 0.140 |
| 3 | 0.108 |
| 4 | 0.067 |
| 5 | 0.024 |
| 6 | -0.015 |
| 7 | -0.043 |
| 8 | -0.050 |
| 9 | -0.024 |
| 10 | 0.044 |

# FIG. 15

START

ACQUIRE SKELETON DATA ~S1501

EDGE DATA CALCULATION PROCESSING ~S1502

FEATURE AMOUNT CALCULATION PROCESSING ~S1503

SMOOTHING DEGREE DETERMINATION PROCESSING ~S1504

EXECUTE SMOOTHING PROCESSING ~S1505

OUTPUT SKELETON DATA AFTER SMOOTHING PROCESSING ~S1506

END

# FIG. 16

START

i = 1 — S1601

SELECT FRAME Fi FROM SKELETON DATA — S1602

SELECT PART GROUP — S1603

CALCULATE DIRECTION OF PART GROUP — S1604

S1605
IS THERE UNSELECTED PART GROUP? — YES

NO

i = i + 1 — S1606

NO — i > n ? — S1607

YES

RETURN

# FIG. 17

```
                    ( START )
                        │
                        ▼
┌─────────────────────────────────────────────┐
│                  i = 1                        │───S1701
└─────────────────────────────────────────────┘
                        │
         ┌──────────────┼──────────────────────────┐
         │              ▼                           │
         │  ┌──────────────────────────────────┐    │
         │  │ SELECT COMBINATION BETWEEN PART   │────S1702
         │  │           GROUPS                  │    │
         │  └──────────────────────────────────┘    │
         │              │                           │
         │              ▼                           │
         │  ┌──────────────────────────────────┐    │
         │  │ CALCULATE RELATIVE ANGLE BETWEEN  │────S1703
         │  │         PART GROUPS               │    │
         │  └──────────────────────────────────┘    │
         │              │            ┌─S1704         │
         │              ▼            │               │
         │         ◇─────────────────────◇  YES      │
         │        ╱  IS THERE UNSELECTED   ╲──────────┘
         │        ╲    COMBINATION?        ╱
         │         ◇─────────────────────◇
         │              │
         │              │ NO
         │              ▼
         │  ┌──────────────────────────────────┐
         │  │             i = i + 1             │────S1705
         │  └──────────────────────────────────┘
         │              │
         │  NO          ▼
         └─────────◇─────────────────◇───S1706
                  ╱    i > n ?         ╲
                   ◇─────────────────◇
                        │ YES
                        ▼
                       (A)
```

# FIG. 18

A

| | |
|---|---|
| i = 1 | S1801 |

| | |
|---|---|
| SELECT COMBINATION BETWEEN PART GROUPS | S1802 |

| | |
|---|---|
| CALCULATE ANGULAR VELOCITY BETWEEN PART GROUPS | S1803 |

S1804

IS THERE UNSELECTED COMBINATION?　　YES

NO

| | |
|---|---|
| i = i + 1 | S1805 |

NO　　i > n ?　　S1806

YES

B

# FIG. 19

B

i = 1 — S1901

SELECT COMBINATION BETWEEN PART
GROUPS — S1902

CALCULATE ANGULAR ACCELERATION
BETWEEN PART GROUPS — S1903

S1904

IS THERE UNSELECTED
COMBINATION? — YES

NO

i = i + 1 — S1905

NO — i > n ? — S1906

YES

RETURN

# FIG. 20

```
                    ( START )
                        │
                        ▼
┌─────────────────────────────────────────┐
│                  i = 1                    │── S2001
└─────────────────────────────────────────┘
                        │
   ┌────────────────────┼──────────────────────────────┐
   │                    ▼                               │
   │   ┌───────────────────────────────────┐            │
   │   │  SELECT COMBINATION BETWEEN PART   │── S2002    │
   │   │            GROUPS                  │            │
   │   └───────────────────────────────────┘            │
   │                    │                               │
   │                    ▼                               │
   │               ╱─────────╲      S2003               │
   │         ╱─────────────────────╲                    │
   │        ╱  IS ANGULAR ACCELERATION ╲      NO         │
   │        ╲ EQUAL TO OR GREATER THAN FIRST╱───────┐   │
   │         ╲   THRESHOLD VALUE?   ╱               │   │
   │          ╲─────────────────────╱               │   │
   │                    │ YES                        │   │
   │                    ▼        S2004               │   │
   │   ┌───────────────────────────────────┐        │   │
   │   │  SPECIFY PART GROUP INCLUDED IN    │        │   │
   │   │ COMBINATION BETWEEN PART GROUPS    │        │   │
   │   └───────────────────────────────────┘        │   │
   │                    │        S2005               │   │
   │                    ▼                            │   │
   │   ┌───────────────────────────────────┐        │   │
   │   │ DETERMINE DEGREE OF SMOOTHING AS "0"│       │   │
   │   └───────────────────────────────────┘        │   │
   │                    │◄───────────────────────────┘   │
   │                    ▼       S2006                     │
   │  YES         ╱─────────────╲                         │
   └────────────╱ IS THERE UNSELECTED ╲                   │
                ╲   COMBINATION?    ╱                     │
                 ╲─────────────────╱                      │
                        │ NO                              │
                        ▼        S2007                     │
            ┌───────────────────────────────┐             │
            │           i = i + 1            │             │
            └───────────────────────────────┘             │
                        │                                  │
                        ▼        S2008      NO             │
                  ╱─────────────╲───────────────────────────┘
                  ╲    i > n ?   ╱
                   ╲───────────╱
                        │ YES
                        ▼
                      ( C )
```

# FIG. 21

```
                    ( C )
                      │
                      ↓              ～S2101
        ┌──────────────────────────────┐
        │   SELECT OBJECT TIME POINT   │
        └──────────────────────────────┘
                      │              ～S2102
                      ↓
        ┌──────────────────────────────┐
        │     SELECT COMBINATION       │
        │    BETWEEN PART GROUPS       │
        └──────────────────────────────┘
                      │              ～S2103
                      ↓
        ┌──────────────────────────────┐
        │  CALCULATE AVERAGE VALUE     │
        │   OF ANGULAR VELOCITIES      │
        └──────────────────────────────┘
                      │
                      ↓                        ～S2104
                   ╱IS AVERAGE VALUE╲
              ╱OF ANGULAR VELOCITIES EQUAL╲    NO
             ╱ TO OR SMALLER THAN SECOND ╲──────────┐
              ╲    THRESHOLD VALUE?      ╱           │
                   ╲                   ╱             │
                      │ YES   ～S2105               │ ～S2107
                      ↓                              ↓
        ┌──────────────────────────┐   ┌──────────────────────────┐
        │   SPECIFY PART GROUP     │   │   SPECIFY PART GROUP     │
        │ INCLUDED IN COMBINATION  │   │ INCLUDED IN COMBINATION  │
        │  BETWEEN PART GROUPS     │   │  BETWEEN PART GROUPS     │
        └──────────────────────────┘   └──────────────────────────┘
                      │ ～S2106                     │ ～S2108
                      ↓                              ↓
        ┌──────────────────────────┐   ┌──────────────────────────┐
        │  DETERMINE DEGREE OF     │   │  DETERMINE DEGREE OF     │
        │   SMOOTHING AS "2"       │   │   SMOOTHING AS "1"       │
        └──────────────────────────┘   └──────────────────────────┘
                      │                              │
                      ↓←─────────────────────────────┘
                      │                        ～S2109
      YES          ╱IS THERE UNSELECTED╲
    ┌───────────── ╲   COMBINATION?    ╱
    │                   ╲           ╱
    │                      │ NO
    │                      ↓              ～S2110
    │     YES          ╱IS THERE UNSELECTED╲
    │   ┌───────────── ╲ OBJECT TIME POINT?╱
    │   │                   ╲           ╱
    │   │                      │ NO
    │   │                      ↓
    │   │                 ( RETURN )
```

# FIG. 22

# FIG. 23A

# FIG. 23B

FIG. 24

# FIG. 25

2500

| FILTER PARAMETER | TECHNIQUE RECOGNITION RATE |
|---|---|
| WEAK FILTER APPLIED TO ENTIRETY (w = 9) | 86.3% |
| STRONG FILTER APPLIED TO ENTIRETY (w = 21) | 88.1% |
| STRONG FILTER APPLIED TO STATIONARY PORTION WEAK FILTER APPLIED TO OTHER PORTIONS | 89.5% |

## INTERNATIONAL SEARCH REPORT

| International application No. |
| --- |
| **PCT/JP2021/037946** |

| **A.** | **CLASSIFICATION OF SUBJECT MATTER** |
| --- | --- |

***G06T 7/00***(2017.01)i
FI: G06T7/00 660Z

According to International Patent Classification (IPC) or to both national classification and IPC

| **B.** | **FIELDS SEARCHED** |
| --- | --- |

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 2020-5192 A (CANON KK) 09 January 2020 (2020-01-09)<br>paragraphs [0020], [0022], [0030], [0050] | 1-15 |
| Y | JP 9-42962 A (ONO SOKKI CO LTD) 14 February 1997 (1997-02-14)<br>paragraphs [0006], [0011]-[0012], [0022]-[0023] | 1-15 |
| Y | JP 2011-24828 A (TOSHIBA CORP) 10 February 2011 (2011-02-10)<br>paragraph [0077] | 1-15 |
| Y | WO 2021/048988 A1 (FUJITSU LTD) 18 March 2021 (2021-03-18)<br>paragraph [0014] | 9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 December 2021** | **28 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/037946**

| Patent document cited in search report | | | Publication date (day/month/year) | Patent family member(s) | Publication date (day/month/year) |
|---|---|---|---|---|---|
| JP | 2020-5192 | A | 09 January 2020 | US 2020/0005670 A1 paragraphs [0029], [0031], [0039], [0057] | |
| JP | 9-42962 | A | 14 February 1997 | (Family: none) | |
| JP | 2011-24828 | A | 10 February 2011 | (Family: none) | |
| WO | 2021/048988 | A1 | 18 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020052867 A

- WO 2012046392 A

**Non-patent literature cited in the description**

- **MENDEZ, C.G.M. ; MENDEZ, S.H. ; SOLIS, A.L. ; FIGUEROA, H.V.R. ; HERNANDEZ, A.M.** The effects of using a noise filter and feature selection in action recognition: an empirical study. *International Conference on Mechatronics, Electronics and Automotive Engineering,* 2017, 43-48